# EUROPEAN PATENT SPECIFICATION

(11) **EP 4 426 482 B1**
(45) Date of publication and mention of the grant of the patent: **25.02.2026**
(21) Application number: 22808699.7
(22) Date of filing: 20.10.2022
(51) Int. Cl.: B01J 23/63, B01J 35/00, B01J 37/02, B01D 53/94

(54) **PLATINUM GROUP METAL CATALYST COMPOSITION**
PLATINGRUPPENMETALLKATALYSATORZUSAMMENSETZUNG
COMPOSITION DE CATALYSEUR DE MÉTAL DU GROUPE DU PLATINE

(30) Priority: 05.11.2021 EP 21206585
(43) Date of publication of application: 11.09.2024
(73) Proprietor: BASF Corporation, Florham Park, NJ 07932 (US); University of Central Florida Research Foundation, Inc., Orlando, FL 32826 (US)
(72) Inventor: LIU, Fudong, Orlando, Florida 32816 (US); XIE, Shaohua, Orlando, Florida 32816 (US); LI, Yuejin, Middlesex (US)
(74) Representative: Altmann Stößel Dick Patentanwälte PartG mbB
(86) International application number: PCT/EP2022/079236
(87) International publication number: WO 2023/078688

(56) References cited:
- EP-A1- 1 316 354
- GB-A- 2 553 339
- US-A1- 2015 306 571

## Description

### FIELD OF THE INVENTION

The presently claimed invention relates to a catalyst composition useful for the treatment of the exhaust gases to reduce contaminants contained therein. Particularly, the presently claimed invention relates to a platinum group metal-based catalyst composition.

### BACKGROUND OF THE INVENTION

Platinum (Pt) is prone to sinter under high-temperature hydrothermal aging conditions, and thus it is difficult to use Pt in conventional three-way conversion (TWC) formulations, which require aging at 900-1050 °C. Platinum deposited on a conventional refractory alumina can grow into submicron size via a well-established Oswald ripening mechanism. Hence, more research on stabilizing platinum using an appropriate support material is needed. The issue of platinum sintering, when loaded on alumina, can be resolved by using ceria as a support. It is found that platinum may form a monolayer, oftentimes partially or fully oxidized on the ceria surface due to strong Pt-CeO₂ interaction. However, bulk ceria itself can undergo sintering upon high temperature aging. Accordingly, in the recent past a ceria-alumina composite as a platinum support for a TWC catalyst was proposed in which platinum is selectively deposited on the ceria-alumina composite. However, there is still requirement of an improved support material which can provide high temperature hydrothermal stability at an aging temperature of > 950°C to the catalyst and thereby improving the catalyst performance.

EP 1 316 354 A1 relates to a catalyst comprising aluminum oxide, magnesium oxide and at least one nitrogen oxide storage material as well as at least one noble metal from the platinum group of the periodic table of elements.
US 2015/306571 A1 discloses a catalyst for abating a nitrogen oxide, comprising a honeycomb substrate comprising a plurality of cell passages partitioned with a cell barrier rib; and a coating layer positioned on the internal side of the cell passages, wherein the coating layer comprises a support comprising Mg-substituted alumina (MgAl₂O₄), ceria (Ce) and a composite ceria; and Ba and a noble metal catalyst selected from the group consisting of Pt, Pd, Rh and combinations thereof supported on the support.

GB 2 553 339 A discloses a NO_{X} trap composition comprising a noble metal, a NO_{X} storage component, a support, and a ceria-containing material, wherein the ceria-containing material has a surface area of less than 80 m²/g.

### SUMMARY OF THE INVENTION

The present invention provides a catalyst composition comprising platinum; and at least one composite, wherein platinum is supported on the composite, wherein the composite comprises ceria (calculated as CeO₂) in an amount of 20 to 40 wt.%, based on the total weight of the composite; alumina (calculated as Al₂O₃) in an amount of 10 to 80 wt.%, based on the total weight the composite; and magnesia (calculated as MgO) in an amount of 10 to 80 wt.%, based on the total weight the composite.

The present invention also provides a process for the preparation of the catalyst composition. The present invention further provides a catalytic article and its preparation.

### BRIEF DESCRIPTION OF THE DRAWINGS

In order to provide an understanding of the embodiments of the invention, reference is made to the appended drawings, which are not necessarily drawn to scale, and in which reference numerals refer to components of exemplary embodiments of the invention. The drawings are exemplary only and should not be construed as limiting the invention. The above and other features of the presently claimed invention, their nature, and various advantages will become more apparent upon consideration of the following detailed description, taken in conjunction with the accompanying drawings:
FIG. 1 shows the CO, NO and HC conversions for aged samples 1 -6.
FIG. 2 shows the CO, NO and HC conversions for aged samples 5, 8 and 9.
FIG. 3 shows the CO, NO and HC conversions for aged samples 1, 2, 5, 7 and 10.
FIG. 4 shows the CO, NO and HC conversions for aged samples 5, 7 and 10 before and after activation.
FIG. 5 shows the CO, NO and HC conversions for aged samples 11, 13, 14, 16, 17 and 18.
FIG. 6 shows the CO, NO and HC conversions for aged samples 12, 15, 17 and 19.
FIG. 7A is a perspective view of a honeycomb-type substrate carrier which may comprise the catalyst composition in accordance with one embodiment of the presently claimed invention.
FIG. 7B is a partial cross-section view enlarged relative to FIG. 7A and taken along a plane parallel to the end faces of the substrate carrier of FIG. 7A, which shows an enlarged view of a plurality of the gas flow passages shown in FIG. 7A.
FIG. 8 is a cutaway view of a section enlarged relative to FIG. 7A, wherein the honeycomb-type substrate in FIG. 7A represents a wall flow filter substrate monolith. FIG. 9 shows X-ray diffraction patterns of fresh and aged Mg30 and Mg70 supports.
FIG. 10 shows X-ray diffraction patterns of Mg30-550 and Mg70-550 as well as Mg30-550-Aged and Mg70-550-Aged samples.
FIG. 11 shows X-ray diffraction patterns of fresh Pt catalysts (A) and aged Pt catalysts (B).

### DETAILED DESCRIPTION

The presently claimed invention now will be described more fully hereafter.

The presently claimed invention may be embodied in many different forms and should not be construed as limited to the embodiments set forth herein; rather, these embodiments are provided so that this presently claimed invention will be thorough and complete, and will fully convey the scope of the invention to those skilled in the art. No language in the specification should be construed as indicating any nonclaimed element as essential to the practice of the disclosed materials and methods.

All methods described herein can be performed in any suitable order unless otherwise indicated herein or otherwise clearly contradicted by context. The use of any and all examples, or exemplary language (e.g., "such as") provided herein, is intended merely to better illustrate the materials and methods and does not pose a limitation on the scope unless otherwise claimed.

### Definitions:

The use of the terms "a", "an", "the", and similar referents in the context of describing the materials and methods discussed herein (especially in the context of the following claims) are to be construed to cover both the singular and the plural, unless otherwise indicated herein or clearly contradicted by context.

Recitation of ranges of values herein are merely intended to serve as a shorthand method of referring individually to each separate value falling within the range, unless otherwise indicated herein, and each separate value is incorporated into the specification as if it were individually recited herein.

In the context of the present invention the term "first layer" is interchangeably used for "bottom layer" or" bottom coat", whereas the term "second layer" is interchangeably used for "top layer" or "top coat". The first layer is deposited at least on a part of the substrate and the second layer is deposited at least on a part of the first layer.

The term "three-way conversion catalyst" refers to a catalyst that simultaneously promotes a) reduction of nitrogen oxides to nitrogen and oxygen; b) oxidation of carbon monoxide to carbon dioxide; and c) oxidation of unburnt hydrocarbons to carbon dioxide and water.

The term "NOx" refers to nitrogen oxide compounds, such as NO and/or NO₂.

As used herein, the term "washcoat" has its usual meaning in the art of a thin, adherent coating of a catalytic or other material applied to a substrate material. Generally, a washcoat is formed by preparing a slurry containing a certain solid content (e.g., 15-60% by weight) of particles in a liquid vehicle, which is then coated onto a substrate and dried to provide a washcoat layer.

Hydrothermal stability of a catalyst may be functionally defined as retaining enough catalytic function after a high temperature aging. Specifically, in this context, hydrothermal stability means that after an aging treatment at a temperature ranging from 950°C to 1050 °C for about 5 hours with 10% steam a catalyst should have lower and/or comparable NO_{X} and/ or hydrocarbon light-off temperature.

As used herein, the term "stream" broadly refers to any combination of flowing gas that may contain solid or liquid particulate matter.

As used herein, the terms "upstream" and "downstream" refer to relative directions according to the flow of an engine exhaust gas stream from an engine towards a tailpipe, with the engine in an upstream location and the tailpipe and any pollution abatement articles such as filters and catalysts being downstream from the engine.

The present invention focusses on addressing platinum sintering under high-temperature hydrothermal aging conditions issue. The solution proposed by the present invention is to stabilize the platinum dispersion and thereby efficiently using platinum in TWC catalyst.

### Catalyst Composition:

The present invention in first aspect provides a catalyst composition comprising a catalyst composition comprising:
a) platinum; and
b) at least one composite,

wherein platinum is supported on the composite,
wherein the composite comprises:
   i) ceria (calculated as CeO₂) in an amount of 20 to 40 wt.%, based on the total weight of the composite;
   ii) alumina (calculated as Al₂O₃) in an amount of 10 to 80 wt.%, based on the total weight the composite; and
   iii) magnesia (calculated as MgO) in an amount of 10 to 80 wt.%, based on the total weight the composite.

Preferably, the total amount of ceria (calculated as CeO₂); alumina (calculated as Al₂O₃); and magnesia (calculated as MgO) is 80 to 100 wt.%, based on the total weight the composite.

Preferably, the amount of composite is 80 to 100 wt.% of the total weight of the catalyst composition.

### Platinum:

Preferably, the total amount of platinum supported on the composite is in the range from 0.1 to 10 wt. % with respect to the total weight of the composite. More preferably, the total amount of platinum supported on the composite is in the range from 0.1 to 5.0 wt. % with respect to the total weight of the composite. Even more preferably, the total amount of platinum supported on the composite is in the range from 0.1 to 3.0 wt. % with respect to the total weight of the composite.

### Support Materials:

A "support" in a catalytic material or catalyst composition or catalyst washcoat refers to a material that receives metals (e.g., PGMs), stabilizers, promoters, binders, and the like through precipitation, association, dispersion, impregnation, or other suitable methods.

### Composite

The support material used for supporting platinum is a composite comprising ceria, alumina, and magnesia.

The term composite can refer to mixture of oxides. The different metal oxides can be present in the mixture as distinct metal oxides, each in its distinct chemical and physical state while interacting through their interfaces, in form of a solid solution (also referred to as complex oxide) or as mixture which comprises both species, distinct metal oxides and solid solutions. In one preferred embodiment, XRD results indicate that the catalyst compositions have mixed CeO₂, MgO, Al₂O₃ and MgAl₂O₄ phases. In one preferred embodiment, the composite can be a bulk mixture or with one or more individual oxides present on the surface. One example is surface modification of Mg/Al oxide by depositing CeO₂ on its surface.

The term solid solution (or complex metal oxide) refers to a mixed metal oxide that contains oxygen anions and at least two different metal cations in one lattice structure. One example for a solid solution is the spinel, in which Al³⁺ and Mg²⁺ are contained in one lattice structure.

Preferably, the composite comprises a dopant selected from lanthana, titania, hafnia, calcia, strontia, baria, zirconia or oxides of yttrium, praseodymium, neodymium, iron, or any combination thereof.

### Alumina:

The term "alumina" refers to stabilized or non-stabilized aluminium oxide. Stabilized aluminium oxide and non-stabilized aluminium oxide can be present in different phase modifications.

Preferably, stabilized aluminium oxide comprises Al₂O; and one or more dopants selected from rare earth metal oxides, alkaline metal oxides, alkaline earth metal oxides, silicon dioxide or any combination of the aforementioned. Preferable dopants are lanthanum oxide (La₂O₃), cerium oxide (CeO₂), zirconium oxide (ZrO₂), barium oxide (BaO), neodymium oxide (Nd₂O₃), strontium oxide (SrO), combinations of lanthanum oxide and zirconium oxide, combinations of barium oxide and lanthanum oxide, combinations of barium oxide, lanthanum oxide and neodymium oxide or combinations of cerium oxide and zirconium oxide. The dopants can impart different properties on the aluminium oxide. The dopants can retard undesired phase transformations of the aluminium oxide, can stabilize the surface area, can introduce defect sites and/or change the acidity of the aluminium oxide surface. The dopant metal may be incorporated in cationic form into the crystal structure of Al₂O₃ to form a complex oxide, may be deposited in oxidic form on the surface of the Al₂O₃, or may be present in oxidic form as blend of mixtures of both dopants and Al₂O₃ on a microscale.

Exemplary stabilized and non-stabilized alumina may include large pore boehmite, gamma-alumina, or delta/theta alumina. Useful commercial alumina includes activated alumina(s), such as high bulk density gamma-alumina, low or medium bulk density large pore gamma-alumina, or low bulk density large pore boehmite and gamma-alumina. Alumina materials are generally considered as providing durability to the resulting catalyst. High surface area alumina supports, also referred to as "gamma alumina" or "activated alumina," typically exhibit a BET surface area of fresh material in excess of 60 square meters per gram ("m²/g"), often up to about 300 m²/g or higher. Preferably, the BET surface area of alumina ranges from about 100 to about 150 m²/g. The activated alumina is usually a mixture of the gamma and delta phases of alumina, but may also contain substantial amounts of eta, kappa, and theta alumina phases. Preferably, alumina in the composite (calculated as Al₂O₃) is present in an amount of 10 to 80 wt.%. More preferably, alumina in the composite (calculated as Al₂O₃) is present in an amount of 12 to 32 wt.%, based on the total weight the composite.

### Ceria:

The term ceria refers to cerium oxide with fluorite structure. The cerium oxide is preferably present as nanoparticles and/or cerium oxide crystallites. Ceria may be doped on the surface of an alumina-containing support by methods typically used for catalyst preparation. Impregnation of a cerium precursor onto a support material using the incipient wetness technique is the mostly used method of preparation, where a cerium salt solution, such as cerium nitrate, is applied on the support material. After drying and calcination, the cerium species turns into crystalline cerium oxide particles. Another cerium precursor is colloidal ceria dispersion, typically, as an aqueous suspension. Colloidal ceria can be purchased from commercial sources, and typically the average particle size of ceria in the colloidal suspension is between 5.0 and 100 nm. The average particle size of ceria on a final catalyst may be determined by X-ray Diffraction (XRD) spectroscopy.

Colloidal suspension can be applied to a support material in ways similar to a cerium salt solution. Since a colloidal ceria suspension comes as a specific mean particle size, the final ceria size on the catalyst after the calcination step is more predictable and can be better controlled. Ceria doping and platinum deposition on a support can be carried out either sequentially (for example, ceria first and platinum second) or in one step (/.e., co-impregnation). Preferably, the ceria present in the composite is present in the form of nanoparticles. More preferably, the ceria present in the composite has a particles size in the range of 5.0 nm to 100 nm. The average particle size of ceria on a final catalyst may be determined by X-ray Diffraction (XRD) spectroscopy.

In a preferred embodiment, the ceria in the composite is at least partly supported on the alumina, the magnesia, or on both alumina and magnesia. The amount of ceria in the composite (calculated as CeO₂) is 20 to 40 wt.%, based on the total weight of the composite.

### Magnesia:

The term magnesia refers to magnesium oxide. Magnesia in the composite can be a bulk mixture of magnesia and alumina made by coprecipitation of magnesium and aluminium mixed salt solution or exists on the surface of alumina. For supports with high magnesia/alumina ratio (for example 50:50), bulk mixture is the only possibility. Magnesia/alumina mixture supports can be conveniently obtained commercially. Typically, there are two distinct crystal phases for the mixture measured by XRD (magnesium oxide and aluminium oxide). If a magnesia/alumina mixture is exposed to high temperature (> 800 °C), it can form a third phase, magnesium aluminate (MgAl₂O₄), which is a spinel structure and can be easily identified by XRD. The amount of magnesia in the composite (calculated as MgO) is 10 to 80 wt.%, based on the total weight the composite. Preferably, the amount of magnesia in the composite (calculated as MgO) is 35 to 65 wt.%, based on the total weight the composite.

### Amounts of oxides in the composite

The amount of ceria in the composite (calculated as CeO₂) is 20 to 40 wt.%, based on the total weight of the composite. Preferably, the amount of ceria (calculated as CeO₂) is 25 to 35 wt.%, based on the total weight of the composite.

In accordance with the present invention, the amount of alumina in the composite (calculated as Al₂O₃) is 10 to 80 wt.%, based on the total weight the composite. Preferably, the amount of alumina in the composite (calculated as Al₂O₃) is 12 to 32 wt.%, based on the total weight the composite.

In accordance with the present invention, the amount of magnesia in the composite (calculated as MgO) is 10 to 80 wt.%, based on the total weight the composite. Preferably, the amount of magnesia in the composite (calculated as MgO) is 35 to 65 wt.%, based on the total weight the composite.

In the composite, the weight ratio of magnesia (calculated as MgO) to alumina (calculated as Al₂O₃) is preferably 1 :4 to 4:1 . More preferably, the weight ratio of magnesia (calculated as MgO) to alumina (calculated as Al₂O₃) is 7:3.

In the composite, the weight ratio of ceria (calculated as CeO₂) and alumina (calculated as Al₂O₃) is preferably in the range of 0.6 to 3.3.

The amount of composite is 80 to 100 wt.% of the total weight of the catalyst composition.

### Preparation of the catalyst composition:

In accordance with another aspect of the presently claimed invention there is also provided a process for the preparation of the catalyst composition described herein above. The process comprises mixing magnesia and alumina to obtain a first composite comprising magnesia and alumina. In the next step, ceria is impregnating on the first composite to obtain a second composite. Finally, platinum is impregnated on the second composite followed by calcination to obtain the catalyst composition. Ceria utilized in the preparation of the catalyst composition is cerium oxide nanoparticles or cerium oxide crystallites with a fluorite structure. Preferably, ceria used is colloidal ceria having an average particle size in the range of 10 nm to 80 nm. Alternatively, the process for the preparation of catalyst composition comprises mixing magnesia and alumina to obtain a composite comprising magnesia and alumina followed by co-impregnating ceria and platinum on the composite and calcination to obtain the catalyst composition.

### Catalytic Article

In accordance with still another aspect of the presently claimed invention there is provided a catalytic article wherein the catalyst composition described herein above is deposited on a substrate.

The catalyst composition comprises a) platinum; and b) at least one composite, wherein platinum is supported on the composite, wherein the composite comprises ceria (calculated as CeO₂) in an amount of 20 to 40 wt.%, based on the total weight of the composite; alumina (calculated as Al₂O₃) in an amount of 10 to 80 wt.%, based on the total weight the composite; and magnesia (calculated as MgO) in an amount of 10 to 80 wt.%, based on the total weight the composite. The composite preferably comprises a dopant selected from lanthana, titania, hafnia, calcia, strontia, baria, zirconia or oxides of yttrium, praseodymium, neodymium, iron, or any combination thereof.

The total amount of platinum supported on the composite is in the range from 0.1 to 10 wt. % with respect to the total weight of the composite. Preferably, the amount of platinum supported on the composite is in the range from 0.1 to 5.0 wt. % with respect to the total weight of the composite.

Preferably, ceria in the composite is in the form of nanoparticles having an average particle size in the range of 5.0 nm to 100 nm. Preferably, the amount of ceria in the composite (calculated as CeO₂) is 20 to 40 wt.%, based on the total weight of the composite.

Preferably, the amount of alumina in the composite (calculated as Al₂O₃) is 12 to 32 wt.%, based on the total weight the composite. Preferably, the amount of magnesia in the composite (calculated as MgO) is 35 to 65 wt.%, based on the total weight the composite.

In the composite, the weight ratio of magnesia (calculated as MgO) to alumina (calculated as Al₂O₃) is preferably 1 :4 to 4:1. More preferably, in the composite the weight ratio of magnesia (calculated as MgO) to alumina (calculated as Al₂O₃) is 7:3.

The weight ratio of ceria (calculated as CeO₂) and alumina (calculated as Al₂O₃) is in the range of 0.6 to 3.3.

In one preferred embodiment, the catalytic article is a single layered catalytic article, i.e., the catalyst composition described herein above is deposited on the substrate as a single layer or single washcoat. Preferably, the washcoat coat covers 90 to 100% of the surface of the substrate. More preferably, the washcoat covers 95 to 100 % of the surface of the substrate and even more preferably, the washcoat covers the whole accessible surface of the substrate. The term "accessible surface" refers to the surface of the substrate which can be covered with the conventional coating techniques used in the field of catalyst preparation like impregnation techniques.

In another preferred embodiment, the catalytic article is a bi-layered article comprising a first layer; a second layer; and a substrate.

### First layer:

The first layer (first washcoat) is deposited on at least parts of the substrate. Preferably, the first washcoat coat covers 90 to 100% of the surface of the substrate. More preferably, the first washcoat covers 95 to 100% of the surface of the substrate and even more preferably, the first washcoat covers the whole accessible surface of the substrate.

The first layer comprises the catalyst composition according to the presently claimed invention and optionally, palladium. Preferably, the loading of platinum is 5.0 to 200 gm/ft³: Preferably, the loading of composite is 0.5 to 4 gm/in³: Preferably, the loading of palladium is 5.0 to 200 gm/ft³.

### Second layer:

The second layer (second washcoat) is deposited on at least parts of the first layer, at least on parts of the substrate, or both. Preferably, the second washcoat coat covers 90 to 100% of the surface of the first layer. More preferably, the second washcoat covers 95 to 100 % of the surface of the first layer and even more preferably, the second washcoat covers the whole accessible surface of the first layer.

The second layer comprises rhodium. Preferably, the loading of rhodium is 1 .0 to 40 gm/ft³.

Alternatively, the first layer can comprise rhodium; and the second layer comprises the catalyst composition according to the presently claimed invention and optionally, palladium.

Still alternatively, the first layer comprises the catalyst composition according to the presently claimed invention and optionally, palladium; and the second layer comprises rhodium and the catalyst composition according to the presently claimed invention.

### Zoned structure:

The catalytic article which is either single layered or bi-layered preferably have a zoned structure. The zoned structure comprises a first zone and a second zone. The first zone, the second zone, or both comprises the catalyst composition according to the presently claimed invention.

The bi-layered article preferably comprising a first layer and a second layer, wherein the first layer, the second layer, or both have a zoned structure, wherein the zoned structure comprises a first zone and a second zone, wherein the first zone, the second zone, or both comprises the catalyst composition according to the presently claimed invention.

In the context of the present invention the term "first zone" is interchangeably used for "inlet zone" or "front zone" and the term "second zone" is interchangeably used for "outlet zone" or "rear zone" The terms "fist zone" and "second zone" also describe the relative positioning of the catalytic article in flow direction, respectively the relative positing of the catalytic article when placed in an exhaust gas treatment system. The first zone would be positioned upstream, whereas the second zone would be positioned downstream. The first zone covers the at least some portion of the substrate from an inlet of the substrate, whereas the second zone covers at least some portion of the substrate from an outlet of the substrate. The inlet of the substrate is a first end which receives the flow of an engine exhaust gas stream from an engine, whereas the outlet of the substrate is a second end from which the treated exhaust gas stream exit.

Preferably, the first zone and the second zone together cover 50 to 100% of length of the substrate. More preferably, the first and second zone together cover 90 to 100% of the length of the substrate and even more preferably, the first and the second zone together cover the whole length of the substrate.

Preferably, the first zone covers 10 to 90% of the entire substrate length from an inlet and the second zone covers 90 to 10 % of the entire substrate length from an outlet, while the first zone and the second zone together cover 20 to 100% of the length of the substrate. More preferably, the first zone covers 20 to 80% of the entire substrate length from the inlet and the second zone covers 80 to 20% of the entire substrate length from the outlet, while the first zone and the second zone together cover 40 to 100% of the length of the substrate. Even more preferably, the first zone covers 30 to 70% of the entire substrate length from the inlet and the second zone covers 70 to 30% of the entire substrate length from the outlet, while the first zone and the second zone together cover 60 to 100% of the length of the substrate. Even most preferably, the first zone covers 40 to 50 % of the entire substrate length from the inlet and the second zone covers 50 to 60% of the entire substrate length from the outlet, while the first zone and the second zone together cover 90 to 100% of the length of the substrate.

### Substrate:

The substrate of the catalytic article of the presently claimed invention may be constructed of any material typically used for preparing automotive catalysts. In a preferred embodiment, the substrate is a ceramic substrate, metal substrate, ceramic foam substrate, or a woven fiber substrate. Preferably, the substrate is a ceramic or a metal monolithic honeycomb structure.

The substrate provides a plurality of wall surfaces upon which washcoats comprising the catalyst compositions described herein above are applied and adhered, thereby acting as a carrier for the catalyst compositions.

Preferable metallic substrates include heat resistant metals and metal alloys such as titanium and stainless steel as well as other alloys in which iron is a substantial or major component. Such alloys may contain one or more nickel, chromium, and/or aluminium, and the total amount of these metals may advantageously comprise at least 15 wt. % of the alloy, e.g., 10-25 wt.% of chromium, 3-8% of aluminium, and up to 20 wt.% of nickel. The alloys may also contain small or trace amounts of one or more metals such as manganese, copper, vanadium, titanium, and the like. The surface of the metal substrate may be oxidized at high temperature, e.g., 1000 °C and higher, to form an oxide layer on the surface of the substrate, improving the corrosion resistance of the alloy and facilitating adhesion of the washcoat layer to the metal surface.

Preferable ceramic materials used to construct the substrate may include any suitable refractory material, e.g., cordierite, mullite, cordierite-alumina, silicon nitride, zircon mullite, spodumene, alumina-silica magnesia, zircon silicate, sillimanite, magnesium silicates, zircon, petalite, alumina, aluminosilicates and the like.

Any suitable substrate may be employed, such as a monolithic flow-through substrate having a plurality of fine, parallel gas flow passages extending from an inlet to an outlet face of the substrate such that passages are open to fluid flow. The passages, which are essentially straight paths from the inlet to the outlet, are defined by walls on which the catalytic material is coated as a washcoat so that the gases flowing through the passages contact the catalytic material. The flow passages of the monolithic substrate are thin-walled channels which are of any suitable cross-sectional shape, such as trapezoidal, rectangular, square, sinusoidal, hexagonal, oval, circular, and the like. Such structures contain from about 60 to about 1200 or more gas inlet openings (/.e., "cells") per square inch of cross section (cpsi), more usually from about 300 to 900 cpsi. The wall thickness of flow-through substrates can vary, with a typical range being between 0.002 and 0.1 inches. A representative commercially available flow-through substrate is a cordierite substrate having 400 cpsi and a wall thickness of 6 mil, or 600 cpsi and a wall thickness of 4 mil. However, it will be understood that the invention is not limited to a particular substrate type, material, or geometry. In alternative embodiments, the substrate may be a wall-flow substrate, wherein each passage is blocked at one end of the substrate body with a non-porous plug, with alternate passages blocked at opposite end-faces. This requires that gas flow through the porous walls of the wall-flow substrate to reach the exit. Such monolithic substrates may contain up to about 700 or more cpsi, such as about 100 to 400 cpsi and more typically about 200 to about 300 cpsi. The cross-sectional shape of the cells can vary as described above. Wall-flow substrates typically have a wall thickness between 0.008 and 0.012 inches. A representative commercially available wall-flow substrate is constructed from a porous cordierite, an example of which has 300 cpsi and 12 mil (1 mil = 0.001 inch) wall thickness or 300 cpsi with 10 mil wall thickness or 300 cpsi with 8 mil wall thickness, and wall porosity between 40-70%. Other ceramic materials such as aluminium-titanate, silicon carbide and silicon nitride are also used as wallflow filter substrates. However, it will be understood that the invention is not limited to a particular substrate type, material, or geometry. Note that where the substrate is a wall-flow substrate, the catalyst composition can permeate into the pore structure of the porous walls (/.e., partially or fully occluding the pore openings) in addition to being disposed on the surface of the walls. In one embodiment, the substrate has a flow through ceramic honeycomb structure, a wall-flow ceramic honeycomb structure, or a metal honeycomb structure.

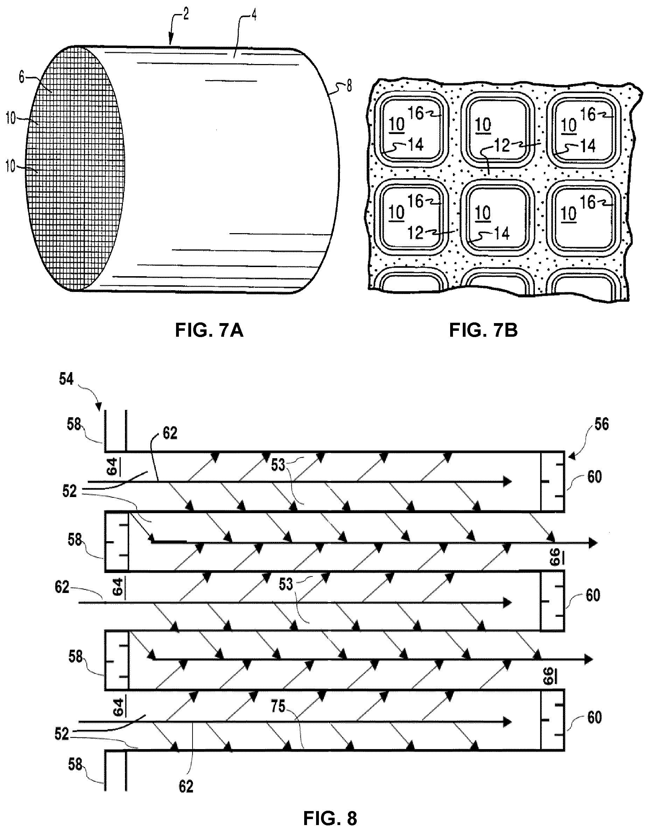

FIGS. 7A and 7B illustrate an exemplary substrate 2 in the form of a flow- through substrate coated with washcoat compositions as described herein. Referring to FIG. 7A, the exemplary substrate 2 has a cylindrical shape and a cylindrical outer surface 4, an upstream end face 6 and a corresponding downstream end face 8, which is identical to end face 6. Substrate 2 has a plurality of fine, parallel gas flow passages 10 formed therein. As seen in FIG. 7B, flow passages 10 are formed by walls 12 and extend through substrate 2 from upstream end face 6 to downstream end face 8, the passages 10 being unobstructed so as to permit the flow of a fluid, e.g., a gas stream, longitudinally through substrate 2 via gas flow passages 10 thereof. As more easily seen in FIG. 7B, walls 12 are so dimensioned and configured that gas flow passages 10 have a substantially regular polygonal shape. As shown, the washcoat compositions can be applied in multiple, distinct layers if desired. In the illustrated embodiment, the washcoats consist of a discrete first washcoat layer 14 adhered to the walls 12 of the substrate member and a second discrete washcoat layer 16 coated over the first washcoat layer 14. In one embodiment, the presently claimed invention is also practiced with two or more (e.g., 3, or 4) washcoat layers and is not limited to the illustrated two-layer embodiment.

FIG. 8 illustrates an exemplary substrate 2 in the form of a wall flow filter substrate coated with a washcoat composition as described herein. As seen in FIG. 8, the exemplary substrate 2 has a plurality of passages 52. The passages are tubularly enclosed by the internal walls 53 of the filter substrate. The substrate has an inlet end 54 and an outlet end 56. Alternate passages are plugged at the inlet end with inlet plugs 58 and at the outlet end with outlet plugs 60 to form opposing checkerboard patterns at the inlet 54 and outlet 56. A gas stream 62 enters through the unplugged channel inlet 64, is stopped by outlet plug 60 and diffuses through channel walls 53 (which are porous) to the outlet side 66. The gas cannot pass back to the inlet side of walls because of inlet plugs 58. The porous wall flow filter used in this invention is catalysed in that the wall of said element has thereon or contained therein one or more catalytic materials. Catalytic materials may be present on the inlet side of the element wall alone, the outlet side alone, both the inlet and outlet sides, or the wall itself may consist all, or in part, of the catalytic material. This invention includes the use of one or more layers of catalytic material on the inlet and/or outlet walls of the element.

### Preparation of catalytic article:

In accordance with another aspect of the presently claimed invention there is also provided a process for the preparation of the catalytic article according to the presently claimed invention. The process comprises preparing a first slurry comprising the catalyst composition according to the presently claimed invention; and depositing the first slurry on the substrate to followed by calcining at a temperature ranging from 400 to 700 °C. The obtained catalytic article is single layered.

Preferably, a two-layered catalytic article is prepared by a process which comprises preparing a first slurry comprising the catalyst composition according to the presently claimed invention and optionally, palladium, preparing a second slurry comprising rhodium; depositing the first slurry on the substrate to obtain a first layer followed by calcining at a temperature ranging from 400 to 700 °C; and depositing the second slurry on the first layer to obtain a second layer followed by calcining at a temperature ranging from 400 to 700 °C.

Preferably, a two-layered catalytic article is prepared by a process which comprises preparing a first slurry comprising the catalyst composition according to the presently claimed invention and palladium; preparing a second slurry comprising rhodium and the catalyst composition according to the presently claimed invention; depositing the first slurry on the substrate to obtain a first layer followed by calcining at a temperature ranging from 400 to 700 °C; and depositing the second slurry on the first layer to obtain a second layer followed by calcining at a temperature ranging from 400 to 700 °C.

Preferably, a two-layered catalytic article is prepared by a process which comprises preparing a first slurry comprising the catalyst composition according to the presently claimed invention and optionally, palladium; preparing a second slurry comprising rhodium; depositing the second slurry on the substrate to obtain a first layer followed by calcining at a temperature ranging from 400 to 700 °C; and depositing the first slurry on the first layer to obtain a second layer followed by calcining at a temperature ranging from 400 to 700 °C.

The preparation of catalytic article involves impregnating a support material in particulate form with an active metal solution, such as palladium, platinum and/or rhodium precursor solution. As used herein, "impregnated" or "impregnation" refers to permeation of the catalytic material into the porous structure of the support material. The techniques used to perform impregnation or preparing slurry include incipient wetness impregnation technique(A); co-precipitation technique (B) and co-impregnation technique (C).

Incipient wetness impregnation techniques, also called capillary impregnation or dry impregnation are commonly used for the synthesis of heterogeneous materials, i.e., catalysts. Typically, a metal precursor is dissolved in an aqueous or organic solution and then the metal-containing solution is added to a catalyst support containing the same pore volume as the volume of the solution that was added. Capillary action draws the solution into the pores of the support. Solution added in excess of the support pore volume causes the solution transport to change from a capillary action process to a diffusion process, which is much slower. The catalyst is dried and calcined to remove the volatile components within the solution, depositing the metal on the surface of the catalyst support. The concentration profile of the impregnated material depends on the mass transfer conditions within the pores during impregnation and drying.

The support particles are typically dry enough to absorb substantially all of the solution to form a moist solid. Aqueous solutions of water soluble compounds or complexes of the active metal are typically utilized, such as rhodium chloride, rhodium nitrate (e.g., Rh(NO)s and salts thereof), rhodium acetate, or combinations thereof where rhodium is the active metal; palladium nitrate, palladium tetra amine, palladium acetate, or combinations thereof where palladium is the active metal; and platinum nitrate, Tetraamine platinum nitrate, platinum acetate, or combinations thereof where platinum is the active metal. Following treatment of the support particles with the active metal solution, the particles are dried, such as by heat treating the particles at elevated temperature (e.g., 100-150°C) for a period of time (e.g., 1 -3 hours), and then calcined to convert the active metal to a more catalytically active form. An exemplary calcination process involves heat treatment in air at a temperature of about 400-550 °C for 10 min to 3 hours. The above process can be repeated as needed to reach the desired level of active metal impregnation.

### Substrate coating:

The above-noted catalyst compositions are typically prepared in the form of catalyst particles as noted above. These catalyst particles are mixed with water to form a slurry for purposes of coating a catalyst substrate, such as a honeycomb-type substrate. In addition to the catalyst particles, the slurry may optionally contain a binder in the form of alumina, silica, zirconium acetate, zirconia, or zirconium hydroxide, associative thickeners, and/or surfactants (including anionic, cationic, non-ionic or amphoteric surfactants). Other exemplary binders include boehmite, gamma-alumina, or delta/theta alumina, as well as silica sol. When present, the binder is typically used in an amount of about 1 .0-5.0 wt.% of the total washcoat loading. Addition of acidic or basic species to the slurry is carried out to adjust the pH accordingly. For example, in some embodiments, the pH of the slurry is adjusted by the addition of ammonium hydroxide, aqueous nitric acid, or acetic acid. A typical pH range for the slurry is about 3.0 to 12.

The slurry can be milled to reduce the particle size and enhance particle mixing. The milling is accomplished in a ball mill, continuous mill, or other similar equipment, and the solids content of the slurry may be, e.g., about 20-60 wt.%, more particularly about 20-40 wt.%. In one embodiment, the post-milling slurry is characterized by a D90 particle size of about 3.0 to about 40 microns, preferably 10 to about 30 microns, more preferably about 10 to about 15 microns. The D90 is determined using a dedicated particle size analyzer. The equipment employed in this example uses laser diffraction to measure particle sizes in small volume slurry. The D90, typically with units of microns, means 90% of the particles by number have a diameter less than that value. The slurry is coated on the catalyst substrate using any washcoat technique known in the art. In one embodiment, the catalyst substrate is dipped one or more times in the slurry or otherwise coated with the slurry. Thereafter, the coated substrate is dried at an elevated temperature (e.g., 100-150 °C) for a period (e.g., 10 min - 3.0 hours) and then calcined by heating, e.g., at 400-700 °C, typically for about 10 minutes to about 3 hours. Following drying and calcining, the final washcoat coating layer is viewed as essentially solvent-free. After calcining, the catalyst loading obtained by the above described washcoat technique can be determined through calculation of the difference in coated and uncoated weights of the substrate. As will be apparent to those of skill in the art, the catalyst loading can be modified by altering the slurry rheology. In addition, the coating/drying/calcining process to generate a washcoat can be repeated as needed to build the coating to the desired loading level or thickness, meaning more than one washcoat may be applied.

### Emission treatment system:

In another aspect of the present invention, there is also provided an exhaust gas treatment system for internal combustion engines, said system comprising the catalytic article described hereinabove. The system can comprise the catalytic article according to the presently claimed invention and an additional a platinum group metal based three-way conversion (TWC) catalytic article. The catalytic article of the present invention may be placed in a close-coupled position. Close-coupled catalysts are placed close to an engine to enable them to reach reaction temperatures as soon as possible. In general, the close-coupled catalyst is placed within three feet, more specifically, within one foot of the engine, and even more specifically, less than six inches from the engine. Close-coupled catalysts are often attached directly to the exhaust gas manifold. Due to their proximity to the engine, close-coupled catalysts are required to be stable at high temperatures.

The catalytic article of the invention can also be used as part of an integrated exhaust system comprising one or more additional components for the treatment of exhaust gas emissions.

For example, the exhaust system also known as emission treatment system may further comprise close coupled TWC catalyst, underfloor catalyst, catalysed soot filter (CSF) component, and/or a selective catalytic reduction (SCR) catalytic article. The preceding list of components is merely illustrative and should not be taken as limiting the scope of the invention.

In another aspect of the present invention, there is also provided a method of treating a gaseous exhaust stream comprising hydrocarbons, carbon monoxide, and nitrogen oxide, the method comprising contacting said exhaust stream with the catalytic article according to the present invention or the exhaust gas treatment system according to the present invention.

The present invention also provides a method of reducing hydrocarbons, carbon monoxide, and nitrogen oxide levels in a gaseous exhaust stream, the method comprising contacting a gaseous exhaust stream with the catalytic article according to the present invention or the exhaust gas treatment system according to the present invention to reduce the levels of hydrocarbons, carbon monoxide, and nitrogen oxide in the exhaust gas.

In another aspect of the present invention, there is also provided use of the catalytic article or the exhaust gas treatment system according to the presently claimed invention for purifying a gaseous exhaust stream comprising hydrocarbons, carbon monoxide, and nitrogen oxide.

The invention is further described by the following aspects. The features of each of the aspects are combinable with any of the other aspects where appropriate and practical.

According to aspect 1, the catalyst composition comprises a) platinum; and b) at least one composite, wherein platinum is supported on the composite, wherein the composite comprises ceria (calculated as CeO₂) in an amount of 20 to 40 wt.%, based on the total weight of the composite; alumina (calculated as Al₂O₃) in an amount of 10 to 80 wt.%, based on the total weight the composite; and magnesia (calculated as MgO) in an amount of 10 to 80 wt.%, based on the total weight the composite.

According to aspect 2, in the catalyst composition according to aspect 1, the ceria is in the form of nanoparticles having an average particle size in the range of 5.0 nm to 100 nm.

According to aspect 3, in the catalyst composition according to any of the aspects 1 -2, the weight ratio of magnesia (calculated as MgO) to alumina (calculated as Al₂O₃) is 1 :4 to 4:1.

According to aspect 4, in the catalyst composition according to any of the aspects 1 -3, the weight ratio of magnesia (calculated as MgO) to alumina (calculated as Al₂O₃) is 7:3.

According to aspect 5, in the catalyst composition according to any of the aspects 1 -4, the total amount of platinum supported on the composite is in the range from 0.1 to 10 wt.% with respect to the total weight of the composite.

According to aspect 6, in the catalyst composition according to any of the aspects 1-5, the composite comprises a dopant selected from lanthana, titania, hafnia, calcia, strontia, baria, zirconia or oxides of yttrium, praseodymium, neodymium, iron or any combination thereof.

According to aspect 7, in the catalyst composition according to any of the aspects 1-6, the composition comprises alumina (calculated as Al₂O₃) in an amount of 12 to 32 wt.%, based on the total weight the composite.

According to aspect 8, in the catalyst composition according to any of the aspects 1-7, mangnesia (calculated as MgO) in an amount of 35 to 65 wt.%, based on the total weight the composite.

According to aspect 9, in the catalyst composition according to any of the aspects 1-8, the weight ratio of ceria (calculated as CeO₂) and alumina (calculated as Al₂O₃) is in the range of 0.6 to 3.3.

According to aspect 10, in the catalyst composition according to any of the aspects 1-9, the amount of composite is 80 to 100 wt.% of the total weight of the catalyst composition.

According to aspect 11, in the catalyst composition according to any of the aspects 1-10, the total amount of ceria (calculated as CeO₂); alumina (calculated as Al₂O₃); and magnesia (calculated as MgO) is 80 to 100 wt.%, based on the total weight the composite.

According to aspect 12, a catalytic article comprises the catalyst composition according to any of the aspects 1 to 11 deposited on a substrate.

According to aspect 13, in the catalytic article according to aspect 12, the catalytic article is a single layered catalytic article.

According to aspect 14, in the catalytic article according to aspect 12, the catalytic article is a bilayered article comprising a first layer; a second layer; and a substrate, wherein the first layer is deposited on at least parts of the substrate and the second layer is deposited on at least parts of the first layer, at least on parts of the substrate, or both, wherein the first layer comprises the catalyst composition according to any of the aspects 1 to 11 and optionally, palladium, wherein the second layer comprises rhodium.

According to aspect 15, in the catalytic article according to aspect 12, the catalytic article is a bilayered article comprising a first layer; a second layer; and a substrate, wherein the first layer is deposited on at least parts of the substrate and the second layer is deposited on at least parts of the first layer, at least on parts of the substrate, or both, wherein the first layer comprises rhodium, wherein the second layer comprises the catalyst composition according to any of any of the aspects 1 to 11 and optionally, palladium.

According to aspect 16, in the catalytic article according to aspect 12, the catalytic article is a bilayered article comprising a first layer; a second layer; and a substrate, wherein the first layer is deposited on at least parts of the substrate and the second layer is deposited on at least parts of the first layer, at least on parts of the substrate, or both, wherein the first layer comprises the catalyst composition according to any of claims 1 to 11 and palladium, wherein the second layer comprises rhodium and the catalyst composition according to any of the aspects 1 to 11.

According to aspect 17, in the catalytic article according to any of the aspects 12 to 13, the catalytic article has a zoned structure, wherein the zoned structure comprises a first zone and a second zone, wherein the first zone, the second zone, or both comprises the catalyst composition according to any of the aspects 1 to 11.

According to aspect 18, in the catalytic article according to any of the aspects 14 to 16, the catalytic article is a bi-layered article comprising a first layer and a second layer, wherein the first layer, the second layer, or both have a zoned structure, wherein the zoned structure comprises a first zone and a second zone, wherein the first zone, the second zone, or both comprises the catalyst composition according to any of the aspects 1 to 11.

According to aspect 19, in the catalytic article according to any of the aspects 12 to 18, the substrate is selected from a ceramic substrate, a metal substrate, a ceramic foam substrate, a polymer foam substrate, or a woven fibre substrate.

### Example 1: Catalyst compositions

Table 1 lists catalyst samples and their compositional information.

Following five support materials were used for making the various catalysts:
1. Al₂O₃ is gamma-alumina without MgO.
2. Mg20 is a support material containing about 20% MgO by weight and about 80% Al₂O₃ by weight.
3. Mg30 is a support material containing about 30% MgO by weight and about 70% Al₂O₃ by weight.
4. Mg70 is a support material containing about 70% MgO by weight and about 30% Al₂O₃ by weight.
5. MgO is 100% MgO without any Al₂O₃.

**Table 1 : Catalyst samples**

| Sample No. | Sample description | Pt % | CeO₂ % | CeO₂ precursor | Support |
|---|---|---|---|---|---|
| 1 | 1.7Pt/Al₂O₃ | 1.7 | 0 | NA | Al₂O₃ |
| 2 | 1.7Pt/Mg70 | 1.7 | 0 | NA | Mg70 |
| 3 | 1.7Pt_17Ce(20)/Mg 70 | 1.7 | 17 | Colloidal CeO₂ (20 nm) | Mg70 |
| 4 | 1.7Pt_26Ce(20)/Mg 70 | 1.7 | 26 | Colloidal CeO₂ (20 nm) | Mg70 |
| 5 | 1.7Pt_34Ce(20)/Mg 70 | 1.7 | 34 | Colloidal CeO₂ (20 nm) | Mg70 |
| 6 | 1.7Pt_51Ce(20)/Mg 70 | 1.7 | 51 | Colloidal CeO₂ (20 nm) | Mg70 |
| 7 | 1.7Pt_34Ce/Mg70 | 1.7 | 34 | Ce nitrate | Mg70 |
| 8 | 1.7Pt/34Ce(20)/Mg7 0 | 1.7 | 34 | Colloidal CeO₂ (20 nm) | Mg70 |
| 9 | 34Ce(20)_1.7Pt/Mg 70 | 1.7 | 34 | Colloidal CeO₂ (20 nm) | Mg70 |
| 10 | 1.7Pt_34Ce(80)/Mg 70 | 1.7 | 34 | Colloidal CeO₂ (80 nm) | Mg70 |
| 11 | 1 Pt/Al₂O₃ | 1 | 0 | NA | Al₂O₃ |
| 12 | 1 Pt-20Ce/Al₂O₃ | 1 | 20 | Cerium nitrate | Al₂O₃ |
| 13 | 1 Pt/Mg20 | 1 | 0 | NA | Mg20 |
| 14 | 1 Pt/Mg30 | 1 | 0 | NA | Mg30 |
| 15 | 1 Pt-20Ce/Mg30 | 1 | 20 | Cerium nitrate | Mg30 |
| 16 | 1 Pt/Mg70 | 1 | 0 | NA | Mg70 |
| 17 | 1 Pt-20Ce/Mg70 | 1 | 20 | Cerium nitrate | Mg70 |
| 18 | 1Pt/MgO | 1 | 0 | NA | MgO |
| 19 | 1 Pt-20Ce/MgO | 1 | 20 | Cerium nitrate | MgO |

| | | | | | |
|---|---|---|---|---|---|
| ** The amount support is Q.S. to make 100%.* | | | | | |

### Sample preparation:

Samples, 1, 2, 11 , 13, 14, 16 and 18 were prepared by impregnating platinum nitrate solution on a support (Al₂O₃, Mg20, Mg30, Mg70, or MgO) using the incipient wetness impregnation technique. The impregnated samples were calcined at 550 °C in air for 2 hours.

Samples 3 - 6 were prepared by sequential impregnation of (first) a colloidal CeO₂ suspension (with the average diameter of CeO₂ particles of about 20 nm) and (second) a platinum nitrate solution on Mg70 support. After the first impregnation, the obtained materials were dried at 120 °C for 15 minutes. After the second the impregnation, the samples were calcined in air at 550 °C for 2 hours.

Samples 7 was prepared by sequential impregnation of (first) a Ce nitrate solution and (second) a platinum nitrate solution on Mg70 support. After the first impregnation, the obtained materials were dried at 120 °C for 15 minutes. After the second the impregnation, the samples were calcined in air at 550 °C for 2 hours.

Sample 8 was prepared by sequential impregnation of (first) a colloidal CeO₂ suspension (with the average diameter of CeO₂ particles of about 20 nm) and (second) a platinum nitrate solution on Mg70 support. After the first impregnation, the obtained material was calcined in air at 550 °C for 2 hours. After the second the impregnation, the sample was calcined again in air at 550 °C for 2 hours.

Sample 9 was prepared by sequential impregnation of (first) a platinum nitrate solution and (second) a colloidal CeO₂ suspension (with the average diameter of CeO₂ particles of about 20 nm) on Mg70 support. After the first impregnation, the obtained material was dried at 120 °C for 15 minutes. After the second the impregnation, the sample was calcined again in air at 550 °C for 2 hours.

Sample 10 was prepared by sequential impregnation of (first) a colloidal CeO₂ suspension (with the average diameter of CeO₂ particles of about 80 nm) and (second) a platinum nitrate solution on Mg70 support. After the first impregnation, the obtained material was dried at 120 °C for 15 minutes. After the second the impregnation, the sample was calcined in air at 550 °C for 2 hours.

Samples 12, 15, 17, 19 were prepared by co-impregnation of platinum nitrate and cerium nitrate mixed solution on a support (Al₂O₃, Mg30, Mg70 or MgO). The impregnated samples were calcined at 550 °C in air for 2 hours.

### Catalyst aging condition:

All catalysts were aged at 950 °C in air with 10% H₂O for 5 hours before activity evaluation.

### Catalyst evaluation conditions:

Two types of test runs (continuous temperature ramp and constant temperatures) were conducted for each sample. For the first run, a catalyst was tested with a continuous temperature ramp from 100 to 500 °C at a temperature ramp rate of 10 °C/min and hold at 500 °C for 30 min. For the second run, steady-state testing was performed from 125 to 500 °C with a temperature step of 25 °C, and at each temperature the holding time was 15 minutes. Both tests used the same feed gas, which contains 1.5% CO, 0.5% H2, 667 ppm C₃H₆, 333 ppm C₃H₈, 1500 ppm NO, 14% CO₂, 10% H₂O, 1.4% O₂ and balanced with Ar. This feed gas is equivalent to a stoichiometric condition, i.e., λ = 1. The weight hourly space velocity for all the tests was kept at 400, 000m L/(g_{cat}. h). Outlet gas composition was measured by infrared spectroscopy (IR) and/or mass spectroscopy (MS).

### Results:

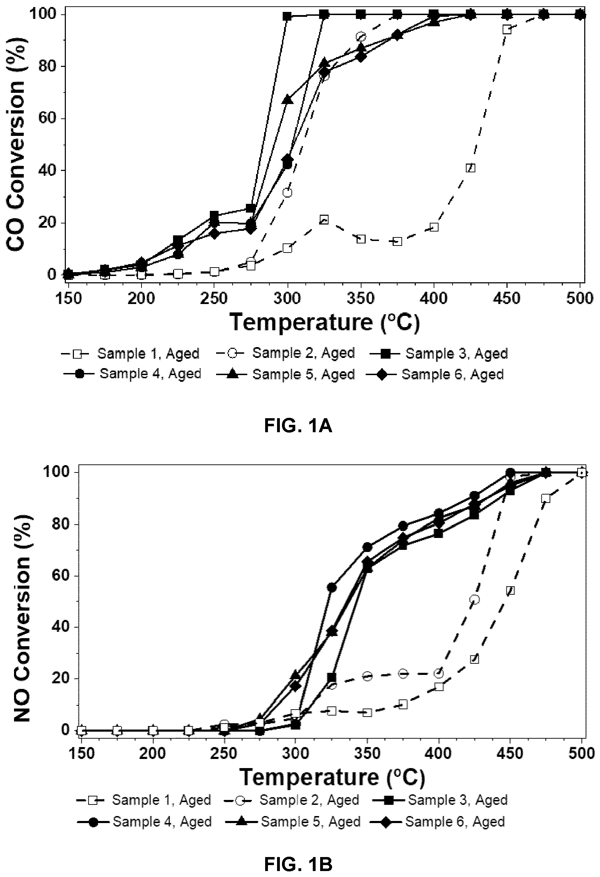

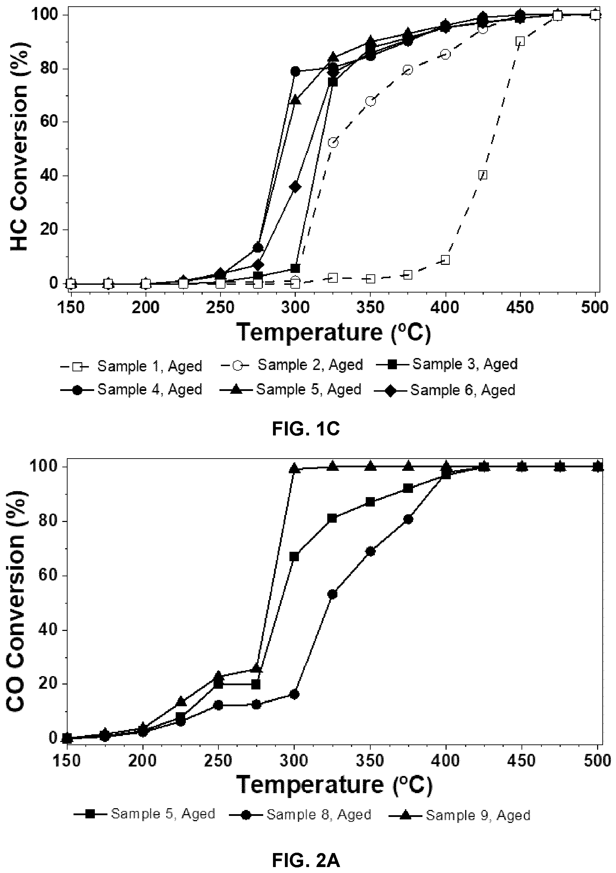

The second run data were used for activity comparison. The results are shown in Figs. 1 to 6.

As shown in Fig. 1 , increasing CeO₂ loading increases the TWC activity up to a point. The HC conversion is the highest when CeO₂ loading is 26-34 wt.%. Further increasing the CeO₂ loading to 51 % brings the activity to a level below the maximum but still higher than the catalyst with 17% CeO₂ or the Ce-free catalyst. For NO_{X} conversion, the optimal CeO₂ loading is found to be 34%.

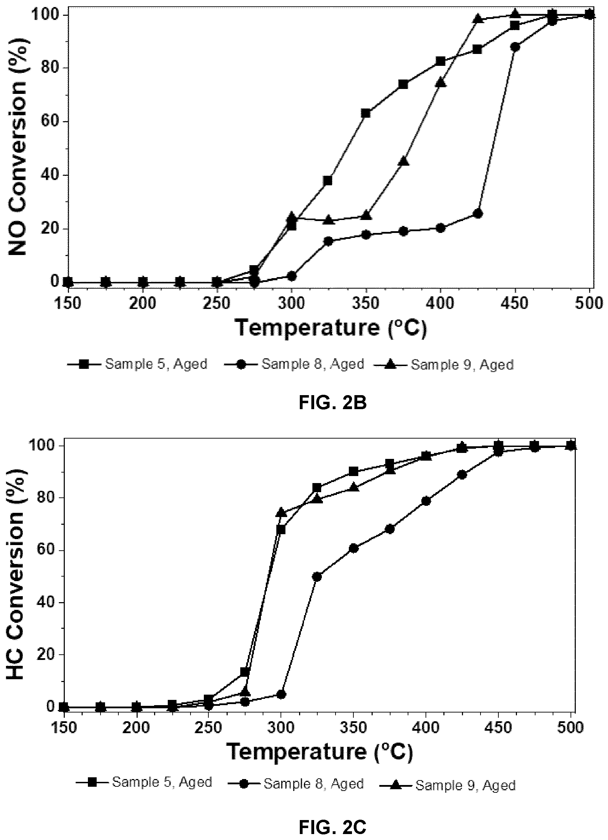

Fig. 2 compares the TWC activity as a function of method of preparation. Preparation method has a complex influence on HC, NO_{X}, and CO conversion. Calcination between impregnation steps results in the lowest conversion for CO, NO_{X}, and HC. Without the intermittent calcination, Ce impregnation first and Pt impregnation second results in higher activities for HC and NO_{X} but not for CO. On the other hand, the reverse sequence of impregnation resulted in a catalyst with better activities for HC and CO but not for NO_{X}.

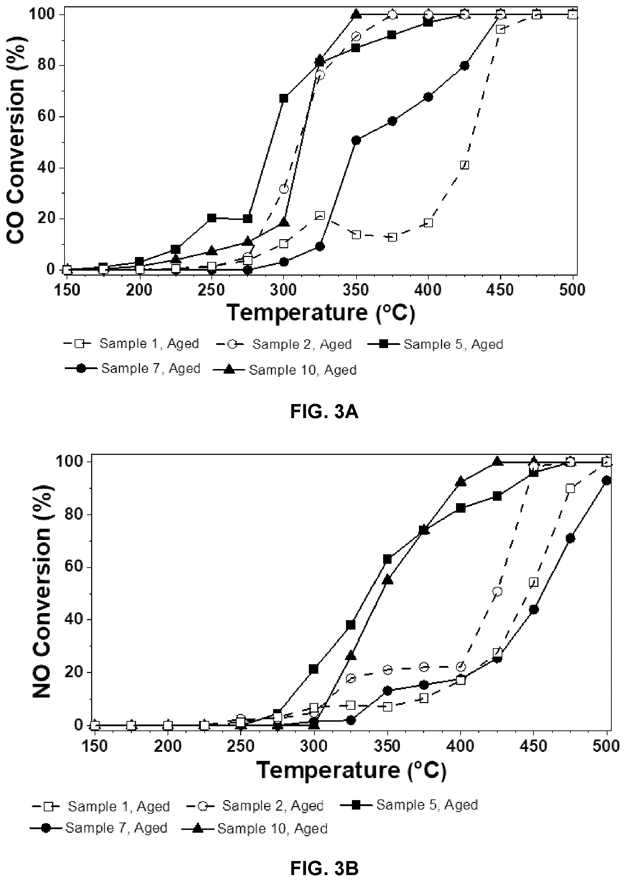

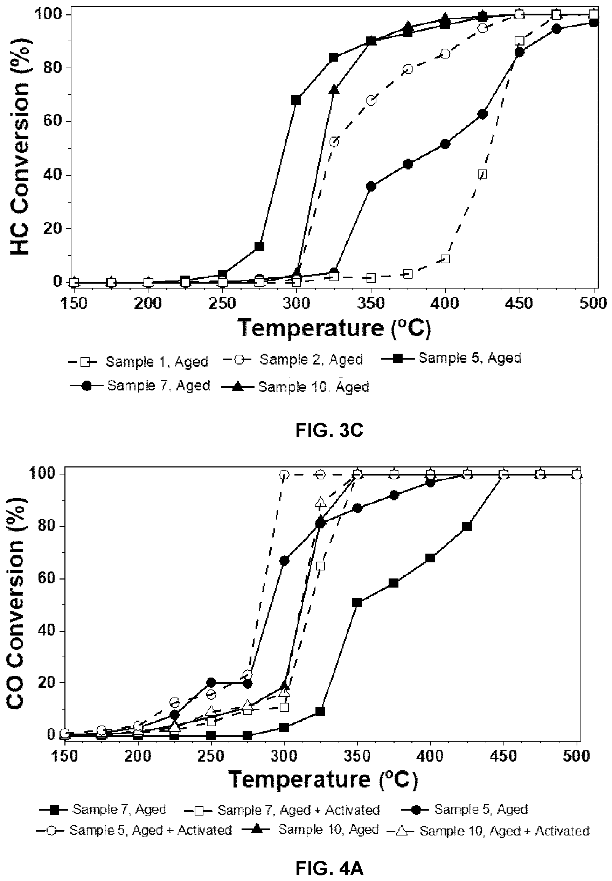

Fig. 3 shows the effects of CeO₂ precursor (Ce nitrate vs. colloidal CeO₂) and particle size (colloidal CeO₂) on TWC activity. Sample 5 is found to be the most active catalyst, followed by Sample 10. The catalyst prepared with Ce nitrate, Sample 7, is less active than those made with colloidal CeO₂ and even inferior to Sample 2.

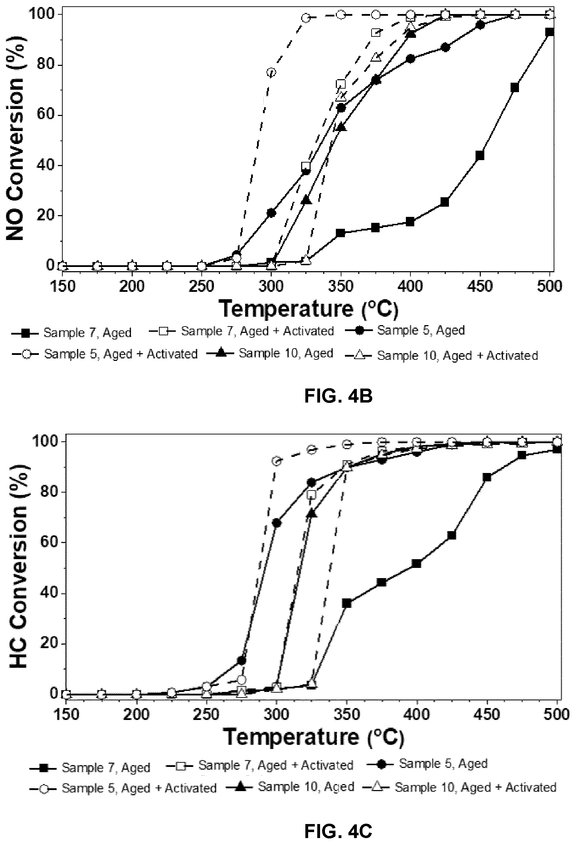

Fig. 4 shows the activation effect for Samples 5, 7 and 10. Sample activation was performed with a reduction treatment at 250 °C with 10% H₂ in Ar for 1 hour. The activation treatment has a various promoting effect on these samples for CO, NO_{X}, and HC conversion. The most pronounce activation effect was found on aged Sample 7. After activation, the most active catalyst is Sample 5.

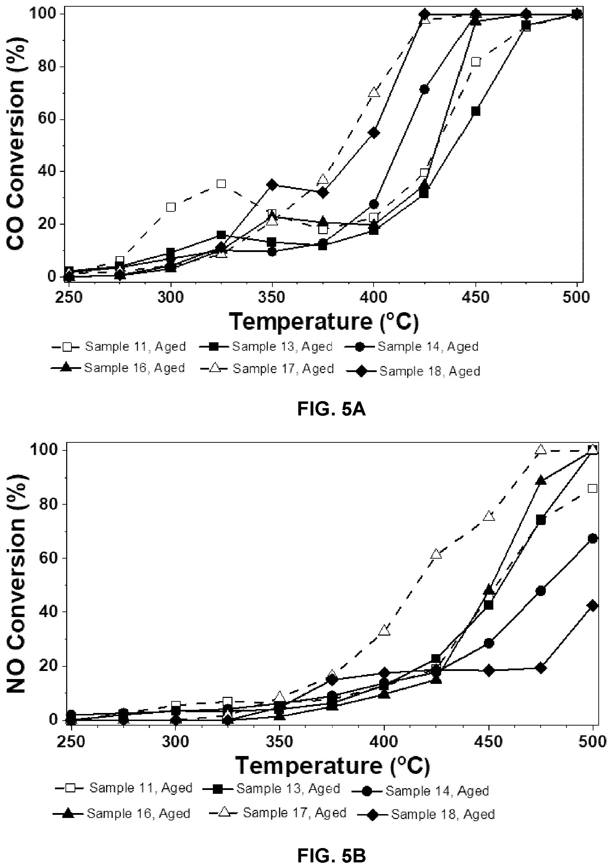

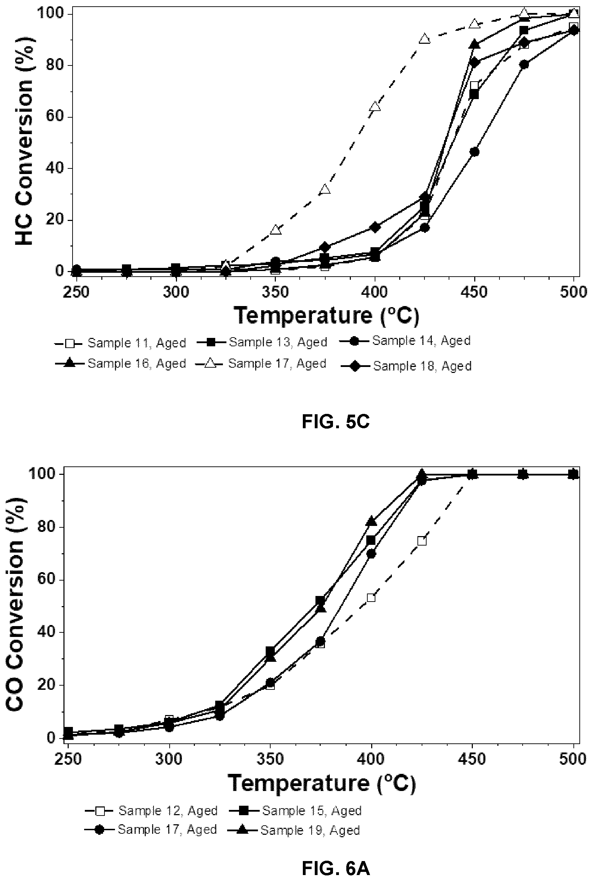

Fig. 5 shows that Pt catalyst supported on Mg70 (Sample 16) is more active for HC and NO than Al₂O₃, Mg20, Mg30 or MgO supported Pt catalysts.

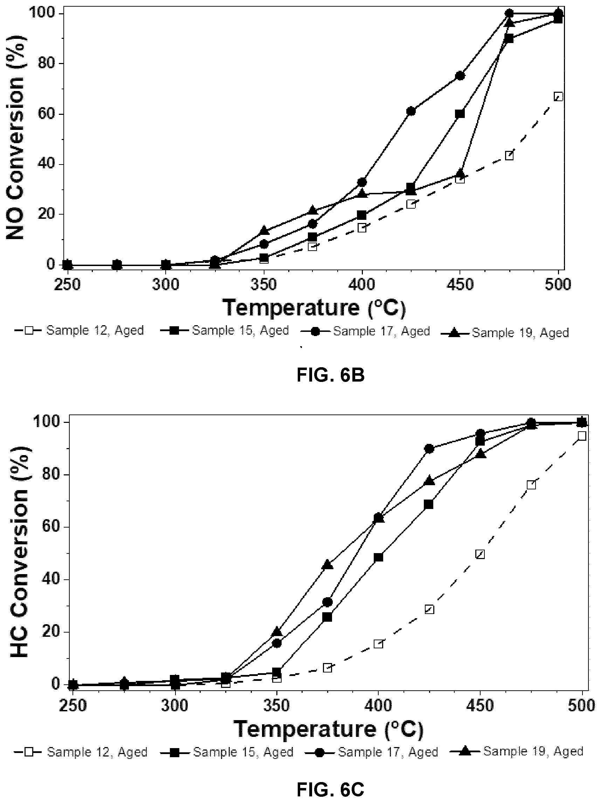

Fig. 6 shows that Sample 17 (1 Pt-20Ce/Mg70) is more active for NO and HC conversion than Sample 12 or 15 (Al₂O₃ or Mg30 supported catalyst). The MgO supported catalyst (Sample 19) has a comparable activity to Sample 17 in HC conversion but is less active for NO conversion.

The sample catalysts were also evaluated for the specific surface areas and average crystallite size. The results are shown in Table 2:

**Table 2: BET surface areas^{®} and CeO₂ crystallite sizes (D)^{b} of fresh and aged catalysts**

| Catalyst | BET (m²/g) | *D*_{CeO2} (nm) |
|---|---|---|
| Sample 7, Fresh | 110.7 | 5.2 |
| Sample 7, Aged | 59.3 | 26.2 |
| Sample 5, Fresh | 129.1 | 6.2 |
| Sample 5, Aged | 65.2 | 34.7 |
| Sample 10, Fresh | 126.5 | 12.6 |
| Sample 10, Aged | 76.3 | 28.2 |

| | | |
|---|---|---|
| ^{a} Calculated by using BET method based on adsorption isotherm in pressure intervals of 0.05 < P/Po < 0.3. ^{b} Determined by XRD results according to Scherrer equation using FWHM of CeO₂ (111) peak. | | |

Table 2 shows the specific surface areas of Samples 5, 7 and 10 and the average CeO₂ crystallite sizes measured by XRD for both fresh and aged samples. The average CeO₂ crystallite size of the fresh catalysts decreases in the order of Sample 10 > Sample 5 > Sample 7. For each catalyst, aging increases the CeO₂ crystallite size by a factor of 2 to 5.

The average CeO₂ crystallite sizes of Samples 12, 15 and 17 before and after aging are shown in table 3:

| Catalyst | *D*_{CeO2} (nm)^{a}, Fresh | *D*_{CeO2} (nm)^{a}, Aged |
|---|---|---|
| Sample 12 | 7.9 | 21.8 |
| Sample 15 | 7.0 | 17.5 |
| Sample 17 | 4.7 | 23.4 |

| | | |
|---|---|---|
| ^{a} Determined by XRD results according to Scherrer equation using FWHM of CeO₂ (111) peak. | | |

For fresh samples, the CeO₂ crystallite size follows the order of Sample 12 > Sample 15 > Sample 17. That is, the CeO₂ size decreases with MgO content on support. After aging, the CeO₂ size increased significantly on all samples, and the ranking of CeO₂ crystallite size becomes Sample 17 > Sample 12 > Sample 15.

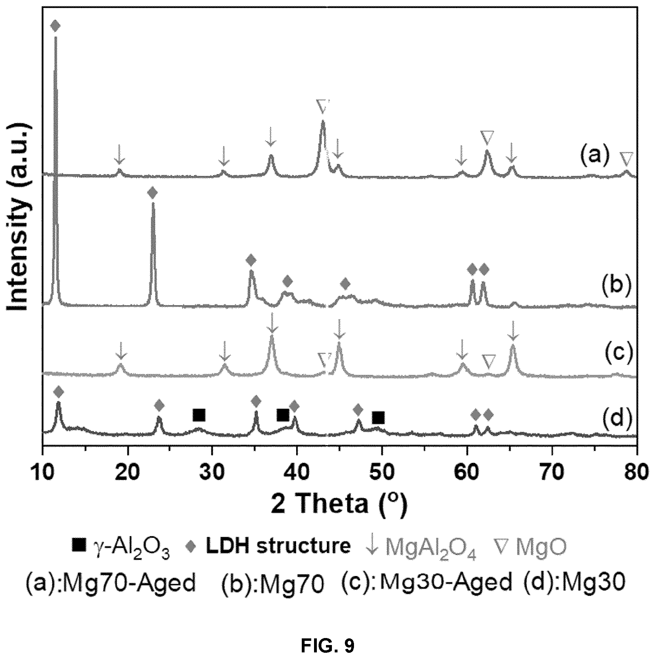

X-ray diffraction patterns of fresh and aged Mg30 and Mg70 supports are shown in Figure 9. Aging was carried out at 950 °C for 5 hours with 10% H₂O in air.

The Figure 9 shows that: i) fresh Mg30 sample is a mixture of a layer double hydroxide (LDH) phase and g-alumina phase. Both phases are not well defined, ii) aged Mg30 sample is a mixture of MgAl₂O₄ spinel phase and MgO phase, there is no alumina phase in aged Mg30, iii) fresh Mg70 sample has a well-defined LDH phase, iv) aged Mg70 sample is a mixture of MgAl-O₄ phase and MgO phase. There is no alumina phase in aged Mg70.

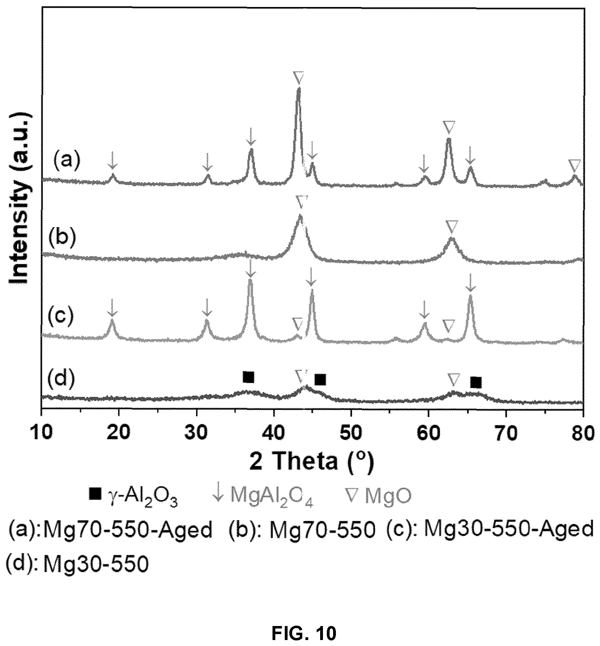

X-ray diffraction patterns of Mg30-550 and Mg70-550 as well as Mg30-550-Aged and Mg70-550-Aged samples are shown in Figure 10. The Mg30-550 and Mg70-550 materials were calcined at 550 °C for 2 hours in air. Mg30-550-Aged and Mg70-550- were aged at 950 °C for 5 hours with 10% H₂O in air.

The Figure 10 shows that: i) Mg30-550 sample is a mixture of MgO phase and g-Al₂O₃ phase, ii) Mg70-550 sample has a dominant MgO phase and a minor g-Al₂O₃ phase, iii) Mg30-550-Aged sample consists of a MgAl₂O₄ phase and a trace of MgO phase, iv) Mg70-550-Aged consists of MgAl₂O₄ phase and a MgO phase, and v) there is no alumina phase in either aged sample.

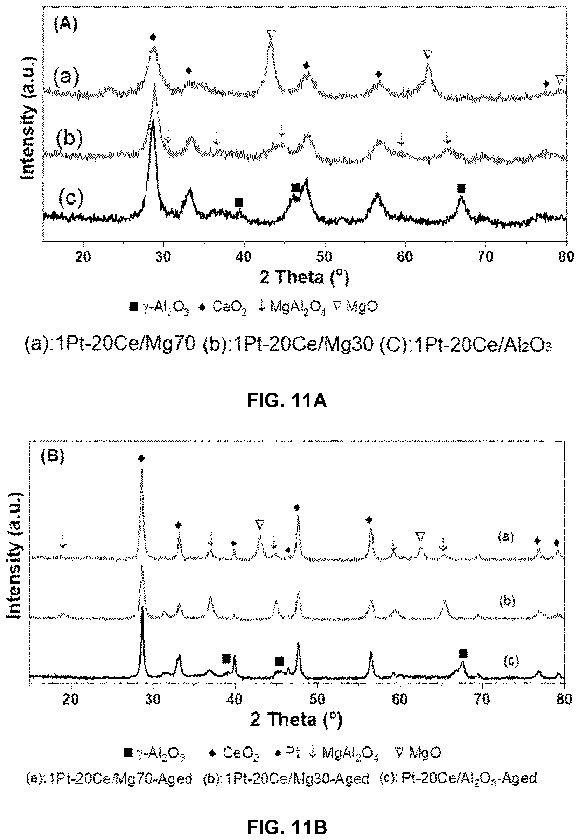

The Figure 11 shows X-ray diffraction patterns of fresh Pt catalysts (A) and aged Pt catalysts (B).

For fresh samples the following observations were found:
- 1 Pt-20Ce/Mg30 sample contains CeO₂ phase and MgAl₂O₄ phase, and no g-Al₂O₃ phase was detected.
   - 1 Pt-20Ce/Mg70 sample contains CeO₂ phase and MgO phase, and no g-Al₂O₃ phase was detected.
   - 1 Pt-20Ce/Al₂O₃ sample contains CeO₂ phase and g-Al₂O₃ phase.
   - On all fresh samples, crystalline Pt was not detected.

For aged samples the following observations were found:
- 1 Pt-20Ce/Mg30-Aged sample contains CeO₂ phase and MgAl₂O₄ phase, no Al₂O₃ phase. Pt was detected.
- 1 Pt-20Ce/Mg70-Aged sample contains CeO₂ phase, MgO phase and MgAl₂O₄ phase, no Al₂O₃ phase. Pt was detected.
- 1 Pt-20Ce/Al₂O₃-Aged sample contains CeO₂ phase and g-Al₂O₃ phase. Pt was detected.
- The Pt diffraction peak (2Theta=~40°) intensity is found to be highest on 1 Pt20Ce/Al₂O₃-Aged sample, which indicates the largest average Pt crystallite size among the three aged samples.

## Claims

1. A catalyst composition comprising:
a) platinum; and
b) at least one composite,
wherein platinum is supported on the composite,
wherein the composite comprises:
i. ceria (calculated as CeO₂) in an amount of 20 to 40 wt.%, based on the total weight of the composite;
ii. alumina (calculated as Al₂O₃) in an amount of 10 to 80 wt.%, based on the total weight the composite; and
iii. magnesia (calculated as MgO) in an amount of 10 to 80 wt.%, based on the total weight the composite.

2. The catalyst composition according to claim 1, wherein the ceria is in the form of nanoparticles having an average particle size in the range of 5.0 nm to 100 nm; and/or
wherein the weight ratio of magnesia (calculated as MgO) to alumina (calculated as Al₂O₃) is 1:4 to 4:1; and/or
wherein the weight ratio of magnesia (calculated as MgO) to alumina (calculated as Al₂O₃) is 7:3; and/or
wherein the total amount of platinum supported on the composite is in the range from 0.1 to 10 wt. % with respect to the total weight of the composite; and/or
wherein the composite comprises a dopant selected from lanthana, titania, hafnia, calcia, strontia, baria, zirconia or oxides of yttrium, praseodymium, neodymium, iron or any combination thereof; and/or
wherein alumina in the composite (calculated as Al₂O₃) is present in an amount of 12 to 32 wt.%, based on the total weight the composite; and/or
wherein mangnesia in the composite (calculated as MgO) is present in an amount of 35 to 65 wt.%, based on the total weight the composite; and/or
wherein the weight ratio of ceria (calculated as CeO₂) and alumina (calculated as Al₂O₃) in the composite is in the range of 0.6 to 3.3; and/or
wherein the amount of composite is 80 to 100 wt.% of the total weight of the catalyst composition.

3. A process for the preparation of the catalyst composition according to claim 1 or 2, wherein the process comprises mixing magnesia and alumina to obtain a first composite comprising magnesia and alumina; impregnating ceria on the first composite to obtain a second composite; and impregnating platinum on the second composite followed by calcination to obtain the catalyst composition; preferably wherein the ceria is colloidal ceria having an average particle size in the range of 10 nm to 80 nm.

4. A process for the preparation of the catalyst composition according to claim 1 or 2, the process comprises:
- mixing magnesia and alumina to obtain a composite comprising magnesia and alumina; and
- co-impregnating ceria and platinum on the composite followed by calcination to obtain the catalyst composition.

5. A catalytic article wherein the catalyst composition according to claim 1 or 2 is deposited on a substrate.

6. The catalytic article according to claim 5, wherein the catalytic article is a single layered catalytic article, wherein the catalyst composition according to claim 1 or 2 is deposited as a single layer on the substrate; and/or
wherein the catalytic article is a bi-layered article comprising:
a) a first layer;
b) a second layer; and
c) a substrate,
wherein the first layer is deposited on at least parts of the substrate and the second layer is deposited on at least parts of the first layer, at least on parts of the substrate, or both,
wherein the first layer comprises the catalyst composition according to claim 1 or 2 and optionally, palladium,
wherein the second layer comprises rhodium; or
wherein the catalytic article is a bilayered article comprising:
a) a first layer;
b) a second layer; and
c) a substrate,
wherein the first layer is deposited on at least parts of the substrate and the second layer is deposited on at least parts of the first layer, at least on parts of the substrate, or both,
wherein the first layer comprises rhodium,
wherein the second layer comprises the catalyst composition according to claim 1 or 2 and optionally, palladium; or
wherein the catalytic article is a bilayered article comprising:
a) a first layer;
b) a second layer; and
c) a substrate,
wherein the first layer is deposited on at least parts of the substrate and the second layer is deposited on at least parts of the first layer, at least on parts of the substrate, or both,
wherein the first layer comprises the catalyst composition according to claim 1 or 2 and palladium,
wherein the second layer comprises rhodium and the catalyst composition according to claim 1 or 2; and/or
wherein the catalytic article has a zoned structure, wherein the zoned structure comprises a first zone and a second zone, wherein the first zone, the second zone, or both comprises the catalyst composition according to claim 1 or 2.

7. The catalytic article according to claim 6, wherein the catalytic article is a bi-layered article comprising a first layer and a second layer, wherein the first layer, the second layer, or both have a zoned structure, wherein the zoned structure comprises a first zone and a second zone, wherein the first zone, the second zone or both comprises the catalyst composition according to claim 1 or 2; and/or
wherein the substrate is selected from a ceramic substrate, a metal substrate, a ceramic foam substrate, or a woven fibre substrate.

8. A process for the preparation of the catalytic article according to claim 5 or 6, wherein said process comprises:
- preparing a first slurry comprising the catalyst composition according to claim 1 or 2; and
- depositing the first slurry on the substrate followed by calcining at a temperature ranging from 400 to 700 °C.

9. A process for the preparation of the catalytic article according to claim 6, wherein said process comprises:
- preparing a first slurry comprising the catalyst composition according to claim 1 or 2 and optionally, palladium;
- preparing a second slurry comprising rhodium;
- depositing the first slurry on the substrate to obtain a first layer followed by calcining at a temperature ranging from 400 to 700 °C; and
- depositing the second slurry on the first layer to obtain a second layer followed by calcining at a temperature ranging from 400 to 700 °C.

10. A process for the preparation of the catalytic article according to claim 6, wherein said process comprises:
- preparing a first slurry comprising the catalyst composition according to claim 1 or 2 and optionally, palladium; preparing a second slurry comprising rhodium;
- depositing the second slurry on the substrate to obtain a first layer followed by calcining at a temperature ranging from 400 to 700 °C; and
- depositing the first slurry on the first layer to obtain a second layer followed by calcining at a temperature ranging from 400 to 700 °C.

11. A process for the preparation of the catalytic article according to claim 6, wherein said process comprises:
- preparing a first slurry comprising the catalyst composition according to claim 1 or 2 and palladium;
- preparing a second slurry comprising rhodium and the catalyst composition according to claim 1 or 2;
depositing the first slurry on the substrate to obtain a first layer followed by calcining at a temperature ranging from 400 to 700 °C; and
- depositing the second slurry on the first layer to obtain a second layer followed by calcining at a temperature ranging from 400 to 700 °C.

12. An exhaust gas treatment system for internal combustion engines, said system comprising the catalytic article according to any of claims 5 to 7.

13. A method of treating a gaseous exhaust stream comprising hydrocarbons, carbon monoxide, nitrogen oxide and particulates, the method comprising contacting said exhaust stream with the catalytic article according to any of claims 5 to 7, or the exhaust gas treatment system according to claim 12.

14. Use of the catalytic article according to any of claims 5 to 7 or the exhaust gas treatment system according to claim 12 for purifying a gaseous exhaust stream comprising hydrocarbons, carbon monoxide, and nitrogen oxide.

## Patentansprüche

1. Katalysatorzusammensetzung, umfassend:
a) Platin; und
b) mindestens einen Verbundwerkstoff,
wobei das Platin auf dem Verbundwerkstoff geträgert ist,
wobei der Verbundstoff umfasst:
i. Cerdioxid (berechnet als CeO₂) in einer Menge von 20 bis 40 Gew.-%, basierend auf dem Gesamtgewicht des Verbundwerkstoffs;
ii. Aluminiumoxid (berechnet als Al₂O₃) in einer Menge von 10 bis 80 Gew.-%, basierend auf dem Gesamtgewicht des Verbundwerkstoffs; und
iii. Magnesia (berechnet als MgO) in einer Menge von 10 bis 80 Gew.-%, basierend auf dem Gesamtgewicht des Verbundwerkstoffs.

2. Katalysatorzusammensetzung nach Anspruch 1, wobei das Cerdioxid in der Form von Nanoteilchen, die eine durchschnittliche Teilchengröße in dem Bereich von 5,0 nm bis 100 nm aufweisen, vorliegt; und/oder
wobei das Gewichtsverhältnis von Magnesia (berechnet als MgO) zu Aluminiumoxid (berechnet als Al₂O₃) 1 : 4 bis 4 : 1 beträgt; und/oder
wobei das Gewichtsverhältnis von Magnesia (berechnet als MgO) zu Aluminiumoxid (berechnet als Al₂O₃) 7 : 3 beträgt; und/oder
wobei die Gesamtmenge des Platins, das auf dem Verbundwerkstoff geträgert ist, in dem Bereich von 0,1 bis 10 Gew.-%, in Bezug auf das Gesamtgewicht des Verbundwerkstoffs, liegt; und/oder
wobei der Verbundwerkstoff einen Dotierstoff umfasst, der aus Lanthanoxid, Titandioxid, Hafniumdioxid, Calciumoxid, Strontiumoxid, Bariumoxid, Zirconiumoxid oder Oxiden von Yttrium, Praseodym, Neodym, Eisen oder einer beliebigen Kombination davon ausgewählt ist; und/oder
wobei Aluminiumoxid in dem Verbundwerkstoff (berechnet als Al₂O₃) in einer Menge von 12 bis 32 Gew.-%, basierend auf dem Gesamtgewicht des Verbundwerkstoffs, vorhanden ist; und/oder
wobei Magnesia in dem Verbundwerkstoff (berechnet als MgO) in einer Menge von 35 bis 65 Gew.-%, basierend auf dem Gesamtgewicht des Verbundwerkstoffs, vorhanden ist; und/oder
wobei das Gewichtsverhältnis von Cerdioxid (berechnet als CeO₂) und Aluminiumoxid (berechnet als Al₂O₃) in dem Verbundwerkstoff in dem Bereich von 0,6 bis 3,3 liegt; und/oder
wobei die Menge des Verbundwerkstoffs 80 bis 100 Gew.-% des Gesamtgewichts der Katalysatorzusammensetzung beträgt.

3. Prozess für die Herstellung der Katalysatorzusammensetzung nach Anspruch 1 oder 2, wobei der Prozess ein Mischen von Magnesia und Aluminiumoxid umfasst, um eine erste Zusammensetzung, umfassend Magnesia und Aluminiumoxid, zu erhalten; Imprägnieren des ersten Verbundwerkstoffs mit Cerdioxid, um einen zweiten Verbundwerkstoff zu erhalten; und Imprägnieren des zweiten Verbundwerkstoffs mit Platin, gefolgt von einer Calcinierung, um die Katalysatorzusammensetzung zu erhalten; wobei das Cerdioxid vorzugsweise kolloidales Cerdioxid, das eine durchschnittliche Teilchengröße in dem Bereich von 10 nm bis 80 nm aufweist, ist.

4. Prozess für die Herstellung der Katalysatorzusammensetzung nach Anspruch 1 oder 2, wobei der Prozess umfasst:
- Mischen von Magnesia und Aluminiumoxid, um einen Verbundwerkstoff, umfassend Magnesia und Aluminiumoxid, zu erhalten; und
- gemeinsames Imprägnieren des Verbundwerkstoffs mit Cerdioxid und Platin, gefolgt von der Calcinierung, um die Katalysatorzusammensetzung zu erhalten.

5. Katalytisches Erzeugnis, wobei die Katalysatorzusammensetzung nach Anspruch 1 oder 2 auf einem Substrat abgeschieden wird.

6. Katalytisches Erzeugnis nach Anspruch 5, wobei das katalytische Erzeugnis ein einschichtiges katalytisches Erzeugnis ist, wobei die Katalysatorzusammensetzung nach Anspruch 1 oder 2 als eine einzelne Schicht auf dem Substrat abgeschieden wird; und/oder
wobei das katalytische Erzeugnis ein zweischichtiges Erzeugnis ist, umfassend:
a) eine erste Schicht;
b) eine zweite Schicht; und
c) ein Substrat,
wobei die erste Schicht auf mindestens Teilen des Substrats abgeschieden wird und die zweite Schicht auf mindestens Teilen der ersten Schicht, mindestens auf Teilen des Substrats oder beiden abgeschieden wird,
wobei die erste Schicht die Katalysatorzusammensetzung nach Anspruch 1 oder 2 und optional Palladium umfasst,
wobei die zweite Schicht Rhodium umfasst; oder
wobei das katalytische Erzeugnis ein zweischichtiges Erzeugnis ist, umfassend:
a) eine erste Schicht;
b) eine zweite Schicht; und
c) ein Substrat,
wobei die erste Schicht auf mindestens Teilen des Substrats abgeschieden wird und die zweite Schicht auf mindestens Teilen der ersten Schicht, mindestens auf Teilen des Substrats oder beiden abgeschieden wird,
wobei die erste Schicht Rhodium umfasst,
wobei die zweite Schicht die Katalysatorzusammensetzung nach Anspruch 1 oder 2 und optional Palladium umfasst; oder
wobei das katalytische Erzeugnis ein zweischichtiges Erzeugnis ist, umfassend:
a) eine erste Schicht;
b) eine zweite Schicht; und
c) ein Substrat,
wobei die erste Schicht auf mindestens Teilen des Substrats abgeschieden wird und die zweite Schicht auf mindestens Teilen der ersten Schicht, mindestens auf Teilen des Substrats oder beiden abgeschieden wird,
wobei die erste Schicht die Katalysatorzusammensetzung nach Anspruch 1 oder 2 und Palladium umfasst,
wobei die zweite Schicht Rhodium und die Katalysatorzusammensetzung nach Anspruch 1 oder 2 umfasst; und/oder
wobei das katalytische Erzeugnis eine in Zonen unterteilte Struktur aufweist, wobei die in Zonen unterteilte Struktur eine erste Zone und eine zweite Zone umfasst, wobei die erste Zone, die zweite Zone oder beide die Katalysatorzusammensetzung nach Anspruch 1 oder 2 umfassen.

7. Katalytisches Erzeugnis nach Anspruch 6, wobei das katalytische Erzeugnis ein zweischichtiges Erzeugnis ist, umfassend eine erste Schicht und eine zweite Schicht, wobei die erste Schicht, die zweite Schicht oder beide eine in Zonen unterteilte Struktur aufweisen, wobei die in Zonen unterteilte Struktur eine erste Zone und eine zweite Zone umfasst, wobei die erste Zone, die zweite Zone oder beide die Katalysatorzusammensetzung nach Anspruch 1 oder 2 umfassen; und/oder
wobei das Substrat aus einem Keramiksubstrat, einem Metallsubstrat, einem Keramikschaumsubstrat oder einem gewebten Fasersubstrat ausgewählt ist.

8. Prozess für die Herstellung des katalytisches Erzeugnisses nach Anspruch 5 oder 6, wobei der Prozess umfasst:
- Herstellen einer ersten Aufschlämmung, umfassend die Katalysatorzusammensetzung nach Anspruch 1 oder 2; und
- Abscheiden der ersten Aufschlämmung auf dem Substrat, gefolgt von einem Calcinieren bei einer Temperatur, die von 400 bis 700 °C reicht.

9. Prozess für die Herstellung des katalytisches Erzeugnisses nach Anspruch 6, wobei der Prozess umfasst:
- Herstellen einer ersten Aufschlämmung, umfassend die Katalysatorzusammensetzung nach Anspruch 1 oder 2 und optional Palladium;
- Herstellen einer zweiten Aufschlämmung, umfassend Rhodium;
- Abscheiden der ersten Aufschlämmung auf dem Substrat, um eine erste Schicht zu erhalten, gefolgt von dem Calcinieren bei einer Temperatur, die von 400 bis 700 °C reicht; und
- Abscheiden der zweiten Aufschlämmung auf der ersten Schicht, um eine zweite Schicht zu erhalten, gefolgt von dem Calcinieren bei einer Temperatur, die von 400 bis 700 °C reicht.

10. Prozess für die Herstellung des katalytisches Erzeugnisses nach Anspruch 6, wobei der Prozess umfasst:
- Herstellen einer ersten Aufschlämmung, umfassend die Katalysatorzusammensetzung nach Anspruch 1 oder 2 und optional Palladium; Herstellen einer zweiten Aufschlämmung, umfassend Rhodium;
- Abscheiden der zweiten Aufschlämmung auf dem Substrat, um eine erste Schicht zu erhalten, gefolgt von dem Calcinieren bei einer Temperatur, die von 400 bis 700 °C reicht; und
- Abscheiden der ersten Aufschlämmung auf der ersten Schicht, um eine zweite Schicht zu erhalten, gefolgt von dem Calcinieren bei einer Temperatur, die von 400 bis 700 °C reicht.

11. Prozess für die Herstellung des katalytisches Erzeugnisses nach Anspruch 6, wobei der Prozess umfasst:
- Herstellen einer ersten Aufschlämmung, umfassend die Katalysatorzusammensetzung nach Anspruch 1 oder 2 und Palladium;
- Herstellen einer zweiten Aufschlämmung, umfassend Rhodium und die Katalysatorzusammensetzung nach Anspruch 1 oder 2;
Abscheiden der ersten Aufschlämmung auf dem Substrat, um eine erste Schicht zu erhalten, gefolgt von dem Calcinieren bei einer Temperatur, die von 400 bis 700 °C reicht; und
- Abscheiden der zweiten Aufschlämmung auf der ersten Schicht, um eine zweite Schicht zu erhalten, gefolgt von dem Calcinieren bei einer Temperatur, die von 400 bis 700 °C reicht.

12. Abgasbehandlungssystem für Verbrennungsmotoren, das System umfassend das katalytische Erzeugnis nach einem der Ansprüche 5 bis 7.

13. Verfahren zum Behandeln eines gasförmigen Abgasstroms, umfassend Kohlenwasserstoffe, Kohlenmonoxid, Stickoxide und Schwebstoffteilchen, das Verfahren umfassend ein Inberührungbringen des Abgasstroms mit dem katalytischen Erzeugnis nach einem der Ansprüche 5 bis 7 oder dem Abgasbehandlungssystem nach Anspruch 12.

14. Verwendung des katalytischen Erzeugnisses nach einem der Ansprüche 5 bis 7 oder des Abgasbehandlungssystems nach Anspruch 12 zum Reinigen eines gasförmigen Abgasstroms, umfassend Kohlenwasserstoffe, Kohlenmonoxid und Stickoxid.

## Revendications

1. Composition de catalyseur comprenant :
a) du platine ; et
b) au moins un composite,
dans laquelle le platine est supporté sur le composite,
dans laquelle le composite comprend :
i. de l'oxyde de cérium (calculé en tant que CeO₂) en une quantité de 20 à 40 % en poids, en fonction du poids total du composite ;
ii. de l'alumine (calculée en tant qu'Al₂O₃) en une quantité de 10 à 80 % en poids, en fonction du poids total du composite ; et
iii. de la magnésie (calculée en tant que MgO) en une quantité de 10 à 80 % en poids, en fonction du poids total du composite.

2. Composition de catalyseur selon la revendication 1, dans laquelle l'oxyde de cérium est sous la forme de nanoparticules ayant une taille moyenne de particules dans la plage de 5,0 nm à 100 nm ; et/ou
dans laquelle le rapport pondéral de la magnésie (calculée en tant que MgO) à l'alumine (calculée en tant qu'Al₂O₃) va de 1:4 à 4:1 ; et/ou
dans laquelle le rapport pondéral de la magnésie (calculée en tant que MgO) à l'alumine (calculée en tant qu'Al₂O₃) est de 7:3 ; et/ou
dans laquelle la quantité totale de platine supporté sur le composite est dans la plage allant de 0,1 à 10 % en poids par rapport au poids total du composite ; et/ou
dans laquelle le composite comprend un dopant choisi parmi oxyde de lanthane, dioxyde de titane, oxyde d'hafnium, oxyde de calcium, oxyde de strontium, oxyde de baryum, zircone ou oxydes d'yttrium, de praséodyme, de néodyme, de fer ou l'une quelconque combinaison de ceux-ci ; et/ou
dans laquelle l'alumine dans le composite (calculée en tant qu'Al₂O₃) est présente en une quantité de 12 à 32 % en poids, en fonction du poids total du composite ; et/ou
dans laquelle la magnésie dans le composite (calculée en tant que MgO) est présente en une quantité de 35 à 65 % en poids, en fonction du poids total du composite ; et/ou
dans laquelle le rapport pondéral d'oxyde de cérium (calculé en tant que CeO₂) et d'alumine (calculée en tant qu'Al₂O₃) dans le composite est dans la plage de 0,6 à 3,3 ; et/ou
dans laquelle la quantité de composite va de 80 à 100 % en poids du poids total de la composition de catalyseur.

3. Processus destiné à la préparation de la composition de catalyseur selon la revendication 1 ou 2, dans lequel le processus comprend le mélange de magnésie et d'alumine pour obtenir un premier composite comprenant de la magnésie et de l'alumine ; l'imprégnation d'oxyde de cérium sur le premier composite pour obtenir un second composite ; et l'imprégnation de platine sur le second composite, suivie par une calcination pour obtenir la composition de catalyseur ; de préférence dans lequel l'oxyde de cérium est de l'oxyde de cérium colloïdal ayant une taille moyenne de particules dans la plage de 10 nm à 80 nm.

4. Processus destiné à la préparation de la composition de catalyseur selon la revendication 1 ou 2, le processus comprend :
- le mélange de magnésie et d'alumine pour obtenir un composite comprenant de la magnésie et de l'alumine ; et
- l'imprégnation conjointe d'oxyde de cérium et de platine sur le composite, suivie par une calcination pour obtenir la composition de catalyseur.

5. Article catalytique dans lequel la composition de catalyseur selon la revendication 1 ou 2 est déposée sur un substrat.

6. Article catalytique selon la revendication 5, dans lequel l'article catalytique est un article catalytique à couche unique, dans lequel la composition de catalyseur selon la revendication 1 ou 2 est déposée en tant que couche unique sur le substrat ; et/ou
dans lequel l'article catalytique est un article à deux couches comprenant :
a) une première couche ;
b) une seconde couche ; et
c) un substrat,
dans lequel la première couche est déposée au moins sur des parties du substrat et la seconde couche est déposée au moins sur des parties de la première couche, au moins sur des parties du substrat, ou sur l'une et l'autre,
dans lequel la première couche comprend la composition de catalyseur selon la revendication 1 ou 2 et facultativement, du palladium,
dans lequel la seconde couche comprend du rhodium ; ou
dans lequel l'article catalytique est un article à deux couches comprenant :
a) une première couche ;
b) une seconde couche ; et
c) un substrat,
dans lequel la première couche est déposée au moins sur des parties du substrat et la seconde couche est déposée au moins sur des parties de la première couche, au moins sur des parties du substrat, ou sur l'une et l'autre,
dans lequel la première couche comprend du rhodium,
dans lequel la seconde couche comprend la composition de catalyseur selon la revendication 1 ou 2 et facultativement, du palladium ; ou
dans lequel l'article catalytique est un article à deux couches comprenant :
a) une première couche ;
b) une seconde couche ; et
c) un substrat,
dans lequel la première couche est déposée au moins sur des parties du substrat et la seconde couche est déposée au moins sur des parties de la première couche, au moins sur des parties du substrat, ou sur l'une et l'autre,
dans lequel la première couche comprend la composition de catalyseur selon la revendication 1 ou 2 et du palladium,
dans lequel la seconde couche comprend du rhodium et la composition de catalyseur selon la revendication 1 ou 2 ; et/ou
dans lequel l'article catalytique a une structure divisée en zones, dans lequel la structure divisée en zones comprend une première zone et une seconde zone, dans lequel la première zone, la seconde zone, ou l'une et l'autre comprennent la composition de catalyseur selon la revendication 1 ou 2.

7. Article catalytique selon la revendication 6, dans lequel l'article catalytique est un article à deux couches comprenant une première couche et une seconde couche, dans lequel la première couche, la seconde couche, ou l'une et l'autre ont une structure divisée en zones, dans lequel la structure divisée en zones comprend une première zone et une seconde zone, dans lequel la première zone, la seconde zone ou l'une et l'autre comprennent la composition de catalyseur selon la revendication 1 ou 2 ; et/ou
dans lequel le substrat est choisi parmi un substrat en céramique, un substrat en métal, un substrat en mousse céramique, ou un substrat en fibres tissées.

8. Processus destiné à la préparation de l'article catalytique selon la revendication 5 ou 6, dans lequel ledit processus comprend :
- la préparation d'une première bouillie comprenant la composition de catalyseur selon la revendication 1 ou 2 ; et
- le dépôt de la première bouillie sur le substrat suivi par une calcination à une température allant de 400 à 700 °C.

9. Processus destiné à la préparation de l'article catalytique selon la revendication 6, dans lequel ledit processus comprend :
- la préparation d'une première bouillie comprenant la composition de catalyseur selon la revendication 1 ou 2 et facultativement, du palladium ;
- la préparation d'une seconde bouillie comprenant du rhodium ;
- le dépôt de la première bouillie sur le substrat pour obtenir une première couche, suivi par une calcination à une température allant de 400 à 700 °C ; et
- le dépôt de la seconde bouillie sur la première couche pour obtenir une seconde couche, suivi par une calcination à une température allant de 400 à 700 °C.

10. Processus destiné à la préparation de l'article catalytique selon la revendication 6, dans lequel ledit processus comprend :
- la préparation d'une première bouillie comprenant la composition de catalyseur selon la revendication 1 ou 2 et facultativement, du palladium ; la préparation d'une seconde bouillie comprenant du rhodium ;
- le dépôt de la seconde bouillie sur le substrat pour obtenir une première couche, suivi par une calcination à une température allant de 400 à 700 °C ; et
- le dépôt de la première bouillie sur la première couche pour obtenir une seconde couche, suivi par une calcination à une température allant de 400 à 700 °C.

11. Processus destiné à la préparation de l'article catalytique selon la revendication 6, dans lequel ledit processus comprend :
- la préparation d'une première bouillie comprenant la composition de catalyseur selon la revendication 1 ou 2 et du palladium ;
- la préparation d'une seconde bouillie comprenant du rhodium et la composition de catalyseur selon la revendication 1 ou 2 ;
le dépôt de la première bouillie sur le substrat pour obtenir une première couche, suivi par une calcination à une température allant de 400 à 700 °C ; et
- le dépôt de la seconde bouillie sur la première couche pour obtenir une seconde couche, suivi par une calcination à une température allant de 400 à 700 °C.

12. Système de traitement de gaz d'échappement destiné à un moteur à combustion interne, ledit système comprenant l'article catalytique selon l'une quelconque des revendications 5 à 7.

13. Procédé de traitement d'un courant d'échappement gazeux comprenant des hydrocarbures, du monoxyde de carbone, de l'oxyde d'azote et des matières particulaires, le procédé comprenant la mise en contact dudit courant d'échappement avec l'article catalytique selon l'une quelconque des revendications 5 à 7, ou le système de traitement de gaz d'échappement selon la revendication 12.

14. Utilisation de l'article catalytique selon l'une quelconque des revendications 5 à 7 ou du système de traitement de gaz d'échappement selon la revendication 12 pour la purification d'un courant d'échappement gazeux comprenant des hydrocarbures, du monoxyde de carbone et de l'oxyde d'azote.
